# EUROPEAN PATENT SPECIFICATION

(11) **EP 2 978 190 B1**
(45) Date of publication and mention of the grant of the patent: **04.03.2020**
(21) Application number: 14178520.4
(22) Date of filing: 25.07.2014
(51) Int. Cl.: H04L 29/08, H04W 8/00

(54) **Causing rendering of information indicative of apparatus identification information**
Verursachen der Wiedergabe von Informationen, die auf Vorrichtungsidentifikationsinformationen hinweisen
Provoquer le rendu d'informations indiquant des informations d'identification de dispositif

(43) Date of publication of application: 27.01.2016
(73) Proprietor: Nokia Technologies Oy, 02610 Espoo (FI)
(72) Inventor: Reunamäki, Jukka, 33820 Tampere (FI); Palin, Arto, 37830 Viiala (FI); Salokannel, Juha, 33710 Tampere (FI)
(74) Representative: Nokia EPO representatives

(56) References cited:
- EP-A1- 2 648 438
- EP-A2- 2 661 144
- US-A1- 2011 081 923
- US-A1- 2013 031 275

## Description

### TECHNICAL FIELD

The present application relates generally to causing rendering of information indicative of apparatus identification information.

### BACKGROUND

In recent times, electronic apparatus have become increasingly pervasive in our society. In many circumstances, a user may often interact with a plurality of electronic apparatus and/or electronic apparatus peripherals in performance of various activities, in various contexts, and/or the like. As such, it may be desirable to configure an apparatus such that a user of the apparatus may interact with the user's electronic apparatuses in a manner that avoids confusion and delay.

EP 2 648 438 A1 describes a terminal coordination system and method therefor. The terminal coordination system performs a pairing process. During this process, a first terminal device sends a search request to plural mobile terminal units. Each mobile terminal unit receiving the search request perform an operation for obtaining sensor information, and sends information about the unit itself and the sensor information to the first terminal device. The first terminal device display the mobile terminal information and sensor information about plural mobile terminal units.

US 2013/031275 describes providing feedback to a user during a pairing process that allows the user to determine with which peripheral device pairing device will pair. More specifically, for example, a pairing device can provide an identify instruction (or command) to a peripheral device after enumerating a group of peripheral devices.

US 2011/081923 describes device movement user interface gestures for file sharing functionality. Methods and devices provide a gesture activated file sharing functionality enabling users to share files with other nearby computing devices. The file sharing functionality may include establishing wireless links with nearby devices and determine their relative locations.

EP 2661144 relates to management of module identification information. It describes that a source device broadcasts a signal for connection establishment, and at least one display device outputs module identification information for identifying itself of a display unit in response to the signal from the source device.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2B are block diagrams showing apparatus communication according to at least one example embodiment;
FIGURES 3A-3C are interaction diagrams illustrating activities associated with establishment of a paired relationship according to at least one example embodiment;
FIGURE 4 is an interaction diagram illustrating activities associated with causing rendering of information indicative of apparatus identification information according to at least one example embodiment;
FIGURES 5A-5B are interaction diagrams illustrating activities associated with causing rendering of information indicative of apparatus identification information according to at least one example embodiment;
FIGURE 6 is a flow diagram illustrating activities associated with determining whether at least one rendering criteria has been satisfied according to at least one example embodiment;
FIGURE 7 is an interaction diagram illustrating activities associated with determining that at least one rendering criteria has been satisfied according to at least one example embodiment; and
FIGURE 8 is an interaction diagram illustrating activities associated with causing rendering of information indicative of separate apparatus identification information according to at least one example embodiment.

### DETAILED DESCRIPTION OF THE DRAWINGS

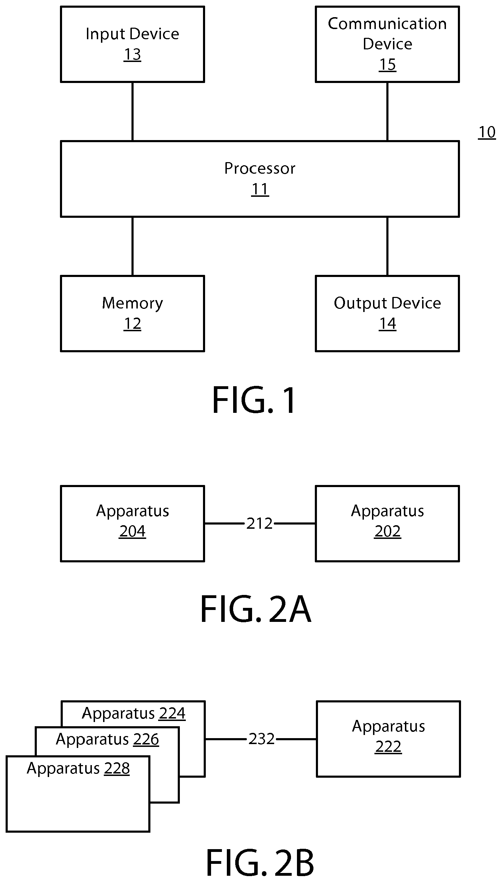

An embodiment of the invention and its potential advantages are understood by referring to FIGURES 1 through 8 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a display, a headset, a speaker, an electronic peripheral, a television, a gaming apparatus, a laptop computer, a tablet computer, a media player, a camera, a video recorder, a mobile phone, a global positioning system (GPS) apparatus, an automobile, a kiosk, an electronic table, a refrigerator, a wearable apparatus, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, Bluetooth low energy, Bluetooth Smart, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 11 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus that comprises a display, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURES 2A-2B are diagrams illustrating apparatus communication according to at least one example embodiment. The examples of FIGURES 2A-2B are merely examples and do not limit the scope of the claims. For example, apparatus count may vary, apparatus configuration may vary, communication channels may vary, and/or the like.

FIGURE 2A is a diagram illustrating apparatus communication according to at least one example embodiment. In the example of FIGURE 2A, apparatus 202 is a primary electronic apparatus. A primary electronic apparatus may be an electronic apparatus that a user commonly utilizes to perform various tasks, functions, and/or the like. For example, a primary electronic apparatus may be a phone, a tablet, a computer, a watch, and/or the like. In the example of FIGURE 2A, apparatus 204 is a secondary electronic apparatus. A secondary electronic apparatus may be an electronic apparatus that a user often utilizes in conjunction with a primary electronic apparatus. For example, a secondary electronic apparatus may be a peripheral, such as a headset, a display, a monitor, a watch, another primary apparatus, and/or the like. Although the aforementioned example describes apparatus 202 and apparatus 204 as distinct types of apparatuses, namely, a primary apparatus and a secondary apparatus, in some circumstances, the apparatuses may both be primary apparatuses, both be secondary apparatuses, and/or the like. In the example of FIGURE 2A, apparatus 202 communicates with apparatus 204 by way of communication channel 212. For example, apparatus 202 may send information to apparatus 204 by way of communication channel 212, apparatus 202 may receive information sent from apparatus 204 by way of communication channel 212, and/or the like. A communication channel, for example, may be a channel utilized for sending and/or receiving of information, data, communications, and/or the like, between two or more apparatuses. It should be understood that, even though the example of FIGURE 2A illustrates a direct communication channel between apparatus 202 and apparatus 204, there may be intermediate apparatuses that facilitate communication between apparatus 202 and apparatus 204. For example, there may be one or more routers, hubs, switches, gateways, and/or the like, that are utilized in the communication channels between apparatus 202 and apparatus 204. In addition, there may be other separate apparatuses that apparatus 202 and/or apparatus 204 are in communication with. For example, apparatus 202 and/or apparatus 204 may be in communication with another apparatus, a separate apparatus, a different apparatus, and/or the like.

In some circumstances, a user may desire to have collaboration between apparatuses, such as between an apparatus and a separate apparatus, based on their proximity with each other. For example, it may be intuitive for a user to manage collaboration between apparatuses that are local to each other. A plurality of apparatuses may be proximate to each other based on location, availability of local communication among the apparatuses, and/or the like. For example, if the apparatuses collaborate by way of low power radio frequency communication, a radio frequency communication, near field communication, inductive communication, electric field communication, Bluetooth communication, infrared communication, local area network communication, wireless local area network communication, local port communication, input/output port communication, and/or the like, the apparatuses may be considered to be proximate with each other based, at least in part, on availability of such proximity-based communication with each other. In at least one example embodiment, an apparatus may be a phone, a tablet, a computer, a wearable apparatus, a head worn apparatus, a hand worn apparatus, an electronic apparatus, a peripheral apparatus, a host apparatus, and/or the like. In at least one example embodiment, apparatuses communicate with each other. For example, an apparatus may be an apparatus that automatically communicates with another apparatus for purposes such as identifying the apparatus, synchronizing data, exchanging status information, and/or the like. In at least one example embodiment, an apparatus retains information associated with communication with a separate apparatus. For example, the apparatus may comprise information associated with identifying, communicating with, authenticating, performing authentication with, and/or the like, the separate apparatus. In this manner, the apparatus may be privileged to perform operations in conjunction with the separate apparatus that a different apparatus may lack the privilege to perform. For example, the apparatus may be privileged to access specific information that may be stored on the separate apparatus, cause the apparatus to perform one or more operations in response to a directive communicated to the separate apparatus, and/or the like.

In at least one example embodiment, communication based, at least in part, on short range communication is referred to as proximity-based communication. In at least one example embodiment, proximity-based communication relates to wireless communication that is associated with a short range, such as low power radio frequency communication, radio frequency communication, near field communication, inductive communication, electric field communication, Bluetooth communication, infrared communication, local area network communication, wireless local area network communication, local port communication, input/output port communication, and/or the like. In such an example, the exchange of information may be by way of the short range wireless communication between the apparatus and a separate apparatus, host apparatus, and/or the like.

In at least one example embodiment, a proximity-based communication channel is a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like. For example, as depicted in FIGURE 2A, apparatus 202 communicates with apparatus 204 by way of a communication channel 212. In the example of FIGURE 2A, communication channel 212 may be a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like.

In at least one example embodiment, an apparatus and a separate apparatus communicate by way of non-proximity-based communication channels. For example, as depicted in FIGURE 2A, apparatus 202 communicates with apparatus 204 by way of communication channel 212. In the example of FIGURE 2A, communication channel 212 may be a local area network communication channel, a wide area network communication channel, an internet communication channel, a cellular communication channel, and/or the like.

In modern times, it is common for a user to have multiple electronic apparatuses that the user selectively utilizes. For example, the user may have multiple primary electronic apparatuses, multiple secondary electronic apparatuses, and/or the like. For example, a user may commonly utilize a particular primary electronic apparatus in conjunction with one of several secondary electronic apparatuses, a plurality of secondary electronic apparatuses, and/or the like.

FIGURE 2B is a diagram illustrating apparatus communication according to at least one example embodiment. In the example of FIGURE 2B, apparatus 222 is a primary electronic apparatus. In the example of FIGURE 2B, apparatuses 224, 226, and 228 are secondary electronic apparatuses. In the example of FIGURE 2B, a user of apparatus 222 may desire to utilize apparatus 222 in conjunction with one or more secondary electronic apparatuses, such as apparatus 224, 226, 228, and/or the like. As such, the user may desire to indicate such a desire to cause establishment of a communication channel between apparatus 222 and one or more secondary electronic apparatuses, such as apparatus 224, 226, 228, and/or the like.

In the example of FIGURE 2B, apparatus 222 communicates with apparatus 224 by way of communication channel 232. For example, apparatus 222 may send information to apparatus 224 by way of communication channel 232, apparatus 222 may receive information sent from apparatus 224 by way of communication channel 232, and/or the like. In the example of FIGURE 2B, communication channel 232 may be similar as described regarding communication channel 212 of FIGURE 2A. It should be understood that, even though the example of FIGURE 2B illustrates a direct communication channel between apparatus 222 and apparatus 224, there may be intermediate apparatuses that facilitate communication between apparatus 222 and apparatus 224. For example, there may be one or more routers, hubs, switches, gateways, and/or the like, that are utilized in the communication channels between apparatus 222 and apparatus 224. In addition, there may be other separate apparatuses that apparatus 222 and/or apparatus 224 are in communication with. For example, apparatus 222 and/or apparatus 224 may be in communication with another apparatus, a separate apparatus, a different apparatus, and/or the like. For example, apparatus 222 may be in communication with apparatus 226, apparatus 228, and/or the like. In another example, apparatus 228 may be in communication with apparatus 222, apparatus 224, apparatus 226, and/or the like.

Although the example of FIGURE 2B describes apparatus 222 as a primary apparatus and apparatuses 224, 226, and 228 as secondary apparatuses, in some circumstances, all apparatuses may be primary apparatus, all apparatuses may be secondary apparatuses, apparatus 222 may be a secondary apparatus, any of apparatuses 224, 226, and/or 228 may be primary apparatuses, and/or the like.

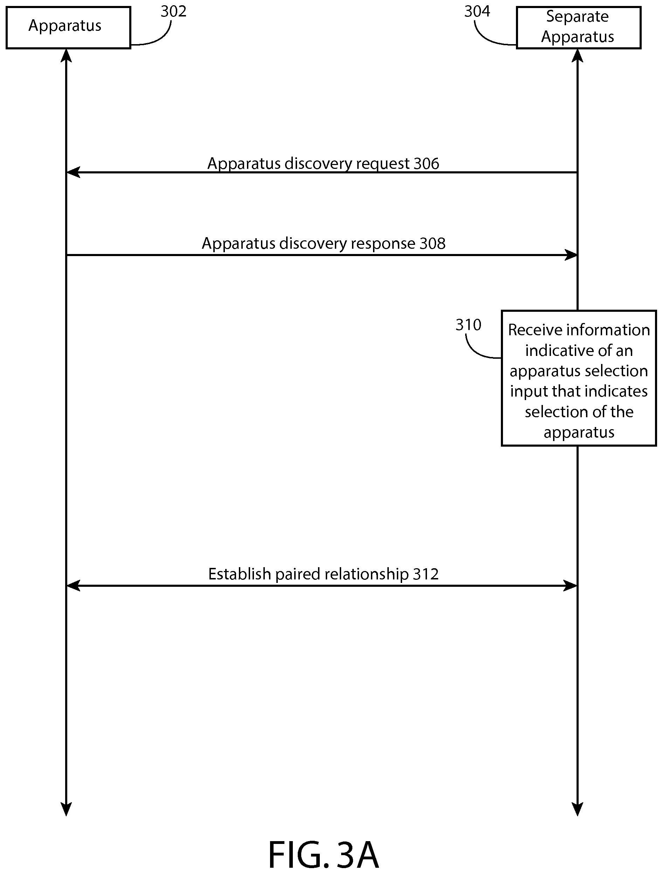

FIGURE 3A is an interaction diagram illustrating activities associated with establishment of a paired relationship according to at least one example embodiment. In at least one example embodiment, there is a set of operations that corresponds with, at least some of, the activities of FIGURE 3A. For example, there may be a set of operations associated with activities of one or more apparatuses of FIGURE 3A. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 3A.

As previously described regarding FIGURES 2A-2B, in many circumstances, a user may desire to utilize an electronic apparatus in conjunction with another electronic apparatus, to interact with an electronic apparatus by way of another electronic apparatus, and/or the like. For example, a user may desire to utilize an apparatus in conjunction with a separate apparatus. In such an example, it may be desirable to establish an association between the apparatus and the separate apparatus such that the apparatus and the separate apparatus are communicatively coupled, as described regarding FIGURES 2A-2B. For example, it may be desirable to establish a communication channel between the apparatus and the separate apparatus, to store information indicative an association between the apparatus and the separate apparatus in memory comprised by the apparatus, the separate apparatus, a different apparatus, etc., and/or the like.

In many circumstances, a user may be in possession of a plurality of apparatuses, a plurality of separate apparatuses, and/or the like. In such circumstances, the user may desire to utilize an apparatus in conjunction with a specific one of the plurality of separate apparatuses. In such circumstances, the user may desire to be able to select the specific separate apparatus that the user desires to utilize in conjunction with the apparatus. In order to facilitate such a selection, it may be desirable to communicate information that identifies a particular apparatus to a separate apparatus, information that identifies a particular separate apparatus to an apparatus, and/or the like. In at least one example embodiment, an apparatus receives information indicative of an apparatus discovery request from a separate apparatus. In such an example embodiment, the apparatus discovery request may be a directive that instructs the apparatus to send information indicative of an identity of the apparatus to the separate apparatus, to broadcast information that identifies the apparatus such that the information may be received by the separate apparatus, and/or the like. In such an example, the apparatus discovery request is a discovery request that is sent to the apparatus, received by the apparatus, and/or the like. In some circumstances, for example, the apparatus may send a separate apparatus discovery request to a separate apparatus. In such an example, the separate apparatus discovery request may be a discovery request that is sent to the separate apparatus, received by the separate apparatus, and/or the like. In this manner, the apparatus discovery request and the separate apparatus discovery request may signify a reference point associated with the discovery request, identify the device to which the discovery request is being sent, identify the device that is being discovered, and/or the like. In some circumstances, the apparatus may receive the information indicative of the apparatus discovery request by way of a communication channel, a proximity-based communication channel, a non-proximity-based communication channel, and/or the like, similar as described regarding FIGURES 2A-2B.

In at least one example embodiment, the apparatus sends an apparatus discovery response to the separate apparatus. In such an example embodiment, the sending of the apparatus discovery response to the separate apparatus may be in response to the apparatus discovery request. For example, the apparatus discovery request may comprise instructions that cause the apparatus to send an apparatus discovery response to the separate apparatus, may comprise a directive that instructs the apparatus to send an apparatus discovery response to the separate apparatus, and/or the like. In at least one example embodiment, the apparatus discovery response comprises apparatus identification information. In such an example embodiment, the apparatus identification information may be any information that identifies at least one apparatus characteristic of the apparatus. An apparatus characteristic may, for example, be a name of the apparatus, a model designation of the apparatus, a brand of the apparatus, a manufacturer of the apparatus, a type of the apparatus, a descriptor of the apparatus, an identification number of the apparatus, and/or the like. In this manner, the apparatus identification information may comprise information that enables identification of the apparatus.

As previously discussed, in some circumstances, a user may be in possession of a plurality of apparatuses that may be used in conjunction with a separate apparatus. For example, a user may desire to utilize the user's phone in conjunction with another apparatus, such as a speaker, a headset, a display, and/or the like. For example, the user may desire to utilize the user's phone in conjunction with the display. In such an example, the user's phone may be configured to discover one or more apparatuses that may be utilized in conjunction with the phone, with which a communication channel may be established, and/or the like. For example, as previously discussed, an apparatus may send an apparatus discovery response to another apparatus in response to an apparatus discovery request received from the other apparatus. In such an example, a user may desire to select a particular apparatus that the user desires to use in conjunction with another apparatus, such that a communication channel is established between the particular apparatus and the other apparatus. In such an example, the user may select the particular apparatus by way of the apparatus identification information that may be sent to the other apparatus by way of the apparatus discovery response. In at least one example embodiment, a paired relationship between an apparatus and a separate apparatus is caused to be established. In such an example embodiment, a paired relationship may be a relationship in which a communication channel exists between the apparatus and the separate apparatus, a communication channel may readily be established between the apparatus and the separate apparatus, and/or the like.

In some circumstances, a user may desire to restrict establishment of a paired relationship between an apparatus and a separate apparatus. For example, the user may desire to only establish a paired relationship with separate apparatuses that the user is in possession of, that the user owns, that the user commonly utilizes in conjunction with the apparatus, and/or the like. In such an example, the restriction of establishment of a paired relationship may be for reasons associated with convenience, usability, privacy, security, data integrity, and/or the like. For example, the user may desire to avoid establishment of a paired relationship between an apparatus and a separate apparatus in circumstances in which the user is not in possession of either the apparatus or the separate apparatus, the user is not the owner of either the apparatus of the separate apparatus, the user does not desire to use the apparatus in conjunction with the separate apparatus, and/or the like. As such, a paired relationship between an apparatus and a separate apparatus may be associated with creation of a trusted relationship between the apparatus and the separate apparatus, establishment of a secure communication channel between the apparatus and the separate apparatus, and/or the like.

In many circumstances, a user may desire to utilize an apparatus in conjunction with a separate apparatus more than once, frequently, and/or the like. As such, it may be desirable to configure an apparatus such that information indicative of a paired relationship between the apparatus and the separate apparatus may be retrieved for future reference, utilized to facilitate establishment of a communication channel between the apparatus and the separate apparatus, and/or the like. As such, it may be desirable to store information indicative of a paired relationship. In at least one example embodiment, establishment of a paired relationship between an apparatus and a separate apparatus comprises storage of information indicative of the paired relationship in at least one of a memory, a repository, a database, and/or the like. For example, the apparatus, the separate apparatus, and/or the like, may store information indicative of the paired relationship in memory, in a repository, in a database, and/or the like. In such an example, the memory, the repository, the database, and/or the like, may be comprised by the apparatus, the separate apparatus, a different separate apparatus, and/or the like. The information indicative of the paired relationship between the apparatus and the separate apparatus may comprise information that identifies the apparatus, information that identifies the separate apparatus, information that indicates one or more parameters associated with the paired relationship, information that indicates one or more parameters associated with establishment of a communication channel between the apparatus and the separate apparatus, and/or the like. For example, the information indicative of the paired relationship between the apparatus and the separate apparatus may comprise a device identification of the apparatus, a network address of the separate apparatus, a media access control address of the apparatus, a protocol associated with establishment of a communication channel between the apparatus and the separate apparatus, and/or the like.

In the example of FIGURE 3A, apparatus 302 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 3A, apparatus 304 may be similar as described regarding apparatus 202 of FIGURE 2A, apparatus 222 of FIGURE 2B, and/or the like.

At interaction 306, apparatus 302 receives information indicative of an apparatus discovery request from separate apparatus 304. In this manner, separate apparatus 304 may send the information indicative of the apparatus discovery request to apparatus 302.

At interaction 308, apparatus 302 sends an apparatus discovery response to separate apparatus 304. In at least one example embodiment, the apparatus discovery response comprises apparatus identification information. In at least one example embodiment, the sending of the apparatus discovery response to separate apparatus 304 is in response to the apparatus discovery request. In this manner, separate apparatus 304 may receive the apparatus discovery response from apparatus 302.

At block 310, separate apparatus 304 receives information indicative of an apparatus selection input that indicates selection of apparatus 302. In at least one example embodiment, an apparatus selection input is an input that identifies a particular apparatus with which a user desires to cause establishment of a paired relationship with. In such an example embodiment, the apparatus selection input may be an input, such as a touch input, a mouse input, a gesture input, and/or the like, that identifies the particular apparatus by way of apparatus identification information, such as the apparatus identification information received by apparatus 304 in interaction 308, by way of information associated with the apparatus discovery response, and/or the like. In some circumstances, the apparatus selection input may be received by apparatus 302. For example, a user may indicate selection of apparatus 302 by way of an apparatus selection input associated with apparatus 302, received by way of apparatus 302, and/or the like. For example, apparatus 302 may comprise an input device, similar as described regarding FIGURE 1, and may receive information indicative of an apparatus selection input that indicates selection of apparatus 302 by way of the input device.

At interaction 312, a paired relationship between apparatus 302 and separate apparatus 304 is established. In this manner, information associated with the establishment of the paired relationship may be communicated between apparatus 302 and separate apparatus 304. For example, apparatus 302 may send information associated with the establishment of the paired relationship such that separate apparatus 304 receives such information. Similarly, separate apparatus 304 may send information associated with the establishment of the paired relationship such that apparatus 302 receives such information. In at least one example embodiment, apparatus 302 stores information indicative of the paired relationship between apparatus 302 and separate apparatus 304 based, at least in part, on the establishment of the paired relationship. In at least one example embodiment, separate apparatus 304 stores information indicative of the paired relationship between apparatus 302 and separate apparatus 304 based, at least in part, on the establishment of the paired relationship.

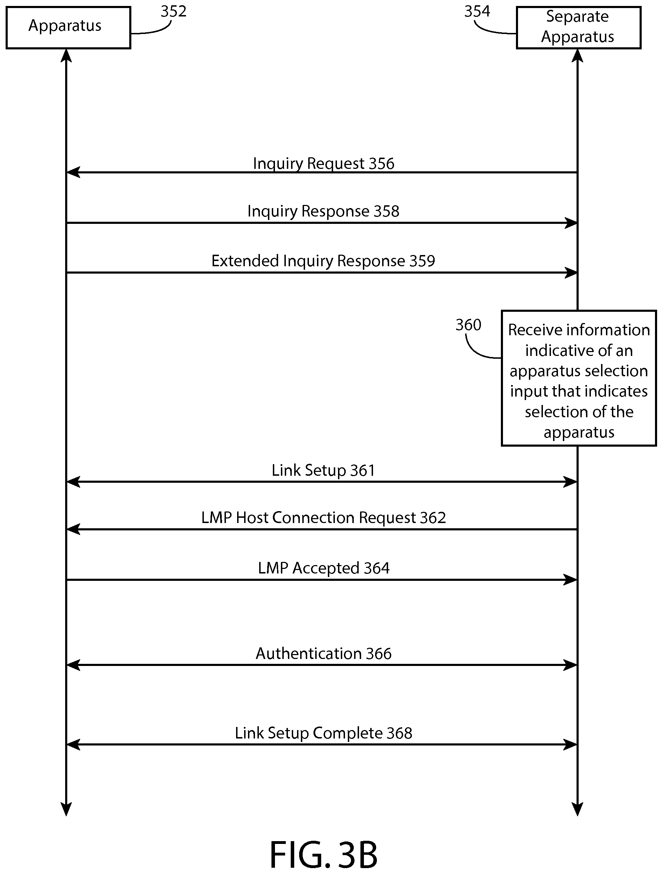

FIGURE 3B is an interaction diagram illustrating activities associated with establishment of a paired relationship according to at least one example embodiment. In at least one example embodiment, there is a set of operations that corresponds with, at least some of, the activities of FIGURE 3B. For example, there may be a set of operations associated with activities of one or more apparatuses of FIGURE 3B. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 3B.

As discussed previously, in many circumstances, a user may utilize an apparatus and a separate apparatus in conjunction with each other. In modern times, many electronic apparatuses are configured to communicate with other electronic apparatuses by way of a wireless communication channel, such as a proximity-based communication channel. For example, the wireless communication channel may be similar as described regarding FIGURES 2A-2B. In at least one example embodiment, an apparatus communicates with a separate apparatus by way of a wireless communication channel. The wireless communication channel may be a communication channel associated with at least one wireless communication protocol, such as 802.11, Bluetooth, near field communication, and/or the like. In at least one example embodiment, the wireless communication channel is a Bluetooth communication channel. As discussed previously, in many circumstances, it may be desirable to communicate apparatus identification information to a separate apparatus in response to receipt of an apparatus discovery request.

In the context of a Bluetooth communication channel, such information may be sent and/or received in accordance with one or more Bluetooth protocols, one or more Bluetooth standards, one or more Bluetooth functions, and/or the like. In at least one example embodiment, an apparatus discovery request comprises an inquiry request. In such an example embodiment, the inquiry request may be sent from a separate apparatus to an apparatus. For example, the separate apparatus may perform one or more operations associated with discovery of discoverable apparatuses, during which the separate apparatus discovers apparatuses with which the separate apparatus may connect to, with which a user of the separate apparatus may desire to establish a paired relationship with, and/or the like.

In some circumstances, an apparatus discovery response may comprise a single response, a combined response, a plurality of responses, and/or the like. For example, the apparatus discovery response may comprise an inquiry response, an extended inquiry response, and/or the like. In at least one example embodiment, an apparatus discovery response comprises an inquiry response. In such an example embodiment, the apparatus may send the inquiry response to the separate apparatus in response to receipt of the inquiry request from the separate apparatus. In such an example embodiment, the inquiry response may comprise information indicative of a user comprehendible identification of the apparatus. For example, the inquiry response may comprise information indicative of a user comprehendible identification of the apparatus, information indicative of an identification of the apparatus that allows a user of the apparatus to differentiate the apparatus from a different apparatus, information indicative of an identification of the apparatus that is descriptive of at least one characteristic of the apparatus, and/or the like. In such an example embodiment, the inquiry response may comprise information indicative of an identification of the apparatus that allows a user of the apparatus to differentiate the apparatus from a different apparatus. For example, the user may desire to select a specific apparatus from a list of apparatuses with which a paired relationship may be established. As such, it may be desirable for the inquiry response to comprise information that allows the user to identify the specific apparatus that the user desires to utilize, to select the particular apparatus with which the user desires to cause establishment of a paired relationship with, and/or the like. In such an example embodiment, the inquiry response may comprise information indicative of an identification of the apparatus that is descriptive of at least one characteristic of the apparatus. As previously discussed, an apparatus characteristic may be a type of the apparatus, a descriptor of the apparatus, an identification number of the apparatus, and/or the like, that enables a user to identify the specific apparatus.

In at least one example embodiment, an apparatus discovery response comprises an extended inquiry response. In such an example embodiment, the extended inquiry response may comprise information indicative of a plain text identification of the apparatus, a user-friendly identification of the apparatus, a common name associated with the apparatus, a brand name of the apparatus, a model designation and/or model name of the apparatus, and/or the like, that a user of the apparatus may comprehend. In at least one example embodiment, the inquiry response comprises the extended inquiry response. In this manner, the apparatus discovery response may comprise an inquiry response and an extended inquiry response.

Although the preceding examples indicate that the apparatus identification information may be comprised by an inquiry response and/or an extended inquiry response, in some circumstances, the apparatus identification information may be comprised by either the inquiry response or the extended inquiry response. For example, an apparatus discovery response may comprise an inquiry response that generally identifies the apparatus, and an extended inquiry response that comprises additional information that is associated with the apparatus, indicative of at least one service provided by the apparatus, and/or the like.

The aforementioned communication between the apparatus and the separate apparatus and/or the communication protocols discussed herein, may, for example, be in conformance with one or more Bluetooth standards, Bluetooth protocols, wireless standards, wireless protocols, and/or the like. For example, the communication between the apparatus and the separate apparatus may be in conformance with the Bluetooth Standard v1.0B, published by the Bluetooth Special Interest Group and dated December 1, 1999, with the Bluetooth Standard v4.1, published by the Bluetooth Special Interest Group and dated December 3, 2013, and/or the like. In another example, the communication between the apparatus and the separate apparatus may be in conformance with any previous and/or subsequent standards and/or protocols which provide for functionality similar to the functionality described herein, which have properties similar to the properties described herein, and/or the like. For example, the communication between the apparatus and the separate apparatus may be in conformance with an earlier-issued Bluetooth standard, may be in conformation with another wireless standard issued in the future, and/or the like. As such, the exact manner in which the apparatus and the separate apparatus communicate does not necessarily limit the scope of the claims.

In the example of FIGURE 3B, apparatus 352 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 3B, apparatus 354 may be similar as described regarding apparatus 202 of FIGURE 2A, apparatus 222 of FIGURE 2B, and/or the like.

At interaction 356, apparatus 352 receives information indicative of an inquiry request from separate apparatus 354. In this manner, separate apparatus 354 may send the information indicative of the inquiry request to apparatus 352. The receipt of information and the inquiry request may be similar as described regarding FIGURES 2A-2B and FIGURES 3A-3C.

At interaction 358, apparatus 352 sends an inquiry response to separate apparatus 354. In at least one example embodiment, the sending of the inquiry response to separate apparatus 354 is in response to the inquiry request. In this manner, separate apparatus 354 may receive the inquiry response from apparatus 352. The sending of information and the inquiry response may be similar as described regarding FIGURES 2A-2B and FIGURES 3A-3C.

At interaction 359, apparatus 352 sends an extended inquiry response to separate apparatus 354. In at least one example embodiment, the sending of the extended inquiry response to separate apparatus 354 is in response to the inquiry request, the inquiry response, and/or the like. In at least one example embodiment, the inquiry response may comprise the extended inquiry response. In this manner, separate apparatus 354 may receive the extended inquiry response from apparatus 352. The sending of information and the extended inquiry response may be similar as described regarding FIGURES 2A-2B and FIGURES 3A-3C.

At block 360, separate apparatus 354 receives information indicative of an apparatus selection input that indicates selection of apparatus 352. The apparatus selection input may be similar as described regarding block 310 of FIGURE 3A.

At interaction 361, a link setup between apparatus 352 and separate apparatus 354 is initiated. For example, apparatus 352 may communicate information indicative of the link setup to separate apparatus 354, separate apparatus 354 may communicate information indicative of the initiation of the link setup to apparatus 352, and/or the like. In at least one example embodiment, the link setup refers to apparatus 352 paging separate apparatus 354, separate apparatus 354 paging apparatus 352, establishment of a temporary communication channel between apparatus 352 and separate apparatus 354, and/or the like. In this manner, the link setup may facilitate establishment of a communication channel between apparatus 352 and separate apparatus 354 for purposes relating to establishment of a paired relationship between apparatus 352 and separate apparatus 354.

At interaction 362, apparatus 352 receives information indicative of a link manager protocol host connection request (LMP_host_connection_req) from separate apparatus 354. In this manner, separate apparatus 354 may send the information indicative of the link manager protocol host connection request (LMP_host_connection_req) to apparatus 352. In at least one example embodiment, a link manager protocol host connection request is a request to establish a paired relationship between an apparatus and another apparatus.

At interaction 364, apparatus 352 sends information indicative of a link manager protocol host connection response (LMP_host_connection_res) to separate apparatus 354. In this manner, separate apparatus 354 may receive the information indicative of the link manager protocol host connection response (LMP_host connection_res) from apparatus 352. In at least one example embodiment, a link manager protocol host connection response is a response that indicates acceptance of a link manager protocol host connection request (LMP_accepted), rejection of a link manager protocol host connection request (LMP_not_accepted), and/or the like. For example, the link manager protocol host connection response may indicate acceptance of the link manager protocol host connection request (LMP accepted) such that the apparatus and the separate apparatus may exchange information associated with establishment of a paired relationship between the apparatus and the separate apparatus, such as exchange of authentication information, for example, encryption keys, device identifications, link keys, and/or the like.

At interaction 366, authentication information is communicated between apparatus 352 and separate apparatus 354. For example, apparatus 352 may send authentication information to separate apparatus 354 such that separate apparatus 354 receives the authentication information from apparatus 352. Similarly, for example, separate apparatus 354 may send authentication information to apparatus 352 such that apparatus 352 receives the authentication information from separate apparatus 354. The communicated authentication information may, for example, comprise information indicative of one or more encryption keys, one or more device identifications, one or more link keys, and/or the like.

At interaction 368, link setup between apparatus 352 and separate apparatus 354 is complete. For example, apparatus 352 may communicate information indicative of the completion of the link setup to separate apparatus 354, separate apparatus 354 may communicate information indicative of the completion of the link setup to apparatus 352, and/or the like. In at least one example embodiment, completion of the link setup refers to establishment of a paired relationship between apparatus 352 and separate apparatus 354.

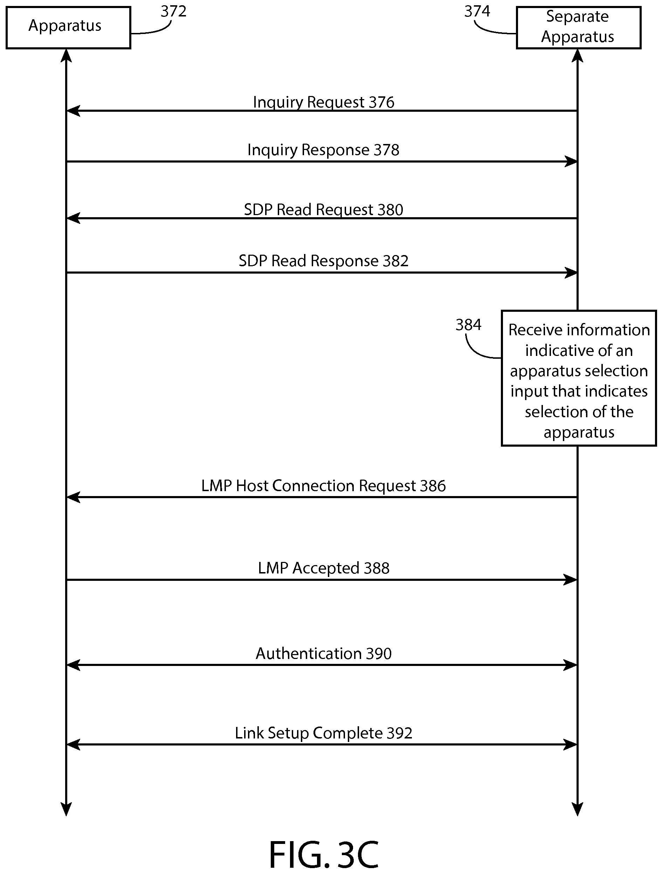

FIGURE 3C is an interaction diagram illustrating activities associated with establishment of a paired relationship according to at least one example embodiment. In at least one example embodiment, there is a set of operations that corresponds with, at least some of, the activities of FIGURE 3C. For example, there may be a set of operations associated with activities of one or more apparatuses of FIGURE 3C. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 3C.

As discussed previously, in many circumstances, a user may utilize an apparatus and a separate apparatus in conjunction with each other by way of a wireless communication channel. As discussed previously, the wireless communication channel may be a communication channel associated with at least one wireless communication protocol, such as 802.11, Bluetooth, near field communication, and/or the like. In at least one example embodiment, the wireless communication channel is a Bluetooth communication channel. As discussed previously, in many circumstances, it may be desirable to communicate apparatus identification information, by way of an apparatus discovery response, to a separate apparatus in response to receipt of an apparatus discovery request.

In the context of a Bluetooth communication channel, such information may be sent and/or received in accordance with one or more Bluetooth protocols, one or more Bluetooth standards, one or more Bluetooth functions, and/or the like. In at least one example embodiment, the apparatus discovery request comprises a service discovery protocol read request. In such an example embodiment, the service discovery protocol read request may be a directive that instructs the apparatus to send information indicative of one or more services that the apparatus is configured to provide. For example, a service may be associated with display of information, rendering of audio information, receipt of audio information from a microphone, and/or the like. In at least one example embodiment, the apparatus discovery response comprises a service discovery protocol read response. As discussed previously, the service discovery protocol read response may comprise information indicative of one or more services that the apparatus is configured to provide. In at least one example embodiment, the service discovery protocol read response comprises information indicative of an identification of the apparatus, such as a universally unique identifier, a device identification, and/or the like. In this manner, the apparatus may receive a service discovery protocol read request, and send a service discovery protocol read response in response to the service discovery protocol read request.

In the example of FIGURE 3C, apparatus 372 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 3C, apparatus 374 may be similar as described regarding apparatus 202 of FIGURE 2A, apparatus 222 of FIGURE 2B, and/or the like.

At interaction 376, apparatus 372 receives information indicative of an inquiry request from separate apparatus 374. In this manner, separate apparatus 374 may send the information indicative of the inquiry request to apparatus 372. The receipt of information and the inquiry request may be similar as described regarding FIGURES 2A-2B and FIGURES 3A-3C.

At interaction 378, apparatus 372 sends an inquiry response to separate apparatus 374. In at least one example embodiment, the sending of the inquiry response to separate apparatus 374 is in response to the inquiry request. In this manner, separate apparatus 374 may receive the inquiry response from apparatus 372. For example, at interaction 378, separate apparatus 374 may receive apparatus identification information associated with apparatus 372 such that separate apparatus 374 may be configured to establish a connection with apparatus 372, establish a communication channel between apparatus 372 and separate apparatus 374, and/or the like. The sending of information and the inquiry response may be similar as described regarding FIGURES 2A-2B and FIGURES 3A-3C.

At interaction 380, apparatus 372 receives information indicative of a service discovery protocol read request from separate apparatus 374. In this manner, separate apparatus 374 may send the information indicative of the service discovery protocol read request to apparatus 372. The receipt of information and the service discovery protocol read request may be similar as described regarding FIGURES 2A-2B and FIGURES 3A-3C.

At interaction 382, apparatus 372 sends a service discovery protocol read response to separate apparatus 374. In at least one example embodiment, the service discovery protocol read response comprises apparatus identification information. In at least one example embodiment, the sending of the service discovery protocol read response to separate apparatus 374 is in response to the service discovery protocol read request. In this manner, separate apparatus 374 may receive the service discovery protocol read response from apparatus 372. The sending of information, the service discovery protocol read response, and the apparatus identification information may be similar as described regarding FIGURES 2A-2B and FIGURES 3A-3C.

At block 384, separate apparatus 374 receives information indicative of an apparatus selection input that indicates selection of apparatus 372. The apparatus selection input may be similar as described regarding block 310 of FIGURE 3A.

In some circumstances, a link setup between apparatus 372 and separate apparatus 374 may be initiated. For example, apparatus 372 may communicate information indicative of the link setup to separate apparatus 374, separate apparatus 374 may communicate information indicative of the initiation of the link setup to apparatus 372, and/or the like. In at least one example embodiment, the link setup refers to apparatus 372 paging separate apparatus 374, separate apparatus 374 paging apparatus 372, establishment of a temporary communication channel between apparatus 372 and separate apparatus 374, and/or the like. In this manner, the link setup may facilitate establishment of a communication channel between apparatus 372 and separate apparatus 374 for purposes relating to establishment of a paired relationship between apparatus 372 and separate apparatus 374.

At interaction 386, apparatus 372 receives information indicative of a link manager protocol host connection request (LMP_host_connection_req) from separate apparatus 374. In this manner, separate apparatus 374 may send the information indicative of the link manager protocol host connection request (LMP_host_connection_req) to apparatus 372. In at least one example embodiment, a link manager protocol host connection request is a request to establish a paired relationship between an apparatus and another apparatus.

At interaction 388, apparatus 372 sends information indicative of a link manager protocol host connection response (LMP_host_connection res) to separate apparatus 374. In this manner, separate apparatus 374 may receive the information indicative of the link manager protocol host connection response (LMP_host_connection_res) from apparatus 372. In at least one example embodiment, a link manager protocol host connection response is a response that indicates acceptance of a link manager protocol host connection request (LMP_accepted), rejection of a link manager protocol host connection request (LMP_not_accepted), and/or the like. For example, the link manager protocol host connection response may indicate acceptance of the link manager protocol host connection request (LMP accepted) such that the apparatus and the separate apparatus may exchange information associated with establishment of a paired relationship between the apparatus and the separate apparatus, such as exchange of authentication information, for example, encryption keys, device identifications, link keys, and/or the like.

At interaction 390, authentication information is communicated between apparatus 372 and separate apparatus 374. For example, apparatus 372 may send authentication information to separate apparatus 374 such that separate apparatus 374 receives the authentication information from apparatus 372. Similarly, for example, separate apparatus 374 may send authentication information to apparatus 372 such that apparatus 372 receives the authentication information from separate apparatus 374. The communicated authentication information may, for example, comprise information indicative of one or more encryption keys, one or more device identifications, one or more link keys, and/or the like.

At interaction 392, link setup between apparatus 372 and separate apparatus 374 is complete. For example, apparatus 372 may communicate information indicative of the completion of the link setup to separate apparatus 374, separate apparatus 374 may communicate information indicative of the completion of the link setup to apparatus 372, and/or the like. In at least one example embodiment, completion of the link setup refers to establishment of a paired relationship between apparatus 372 and separate apparatus 374.

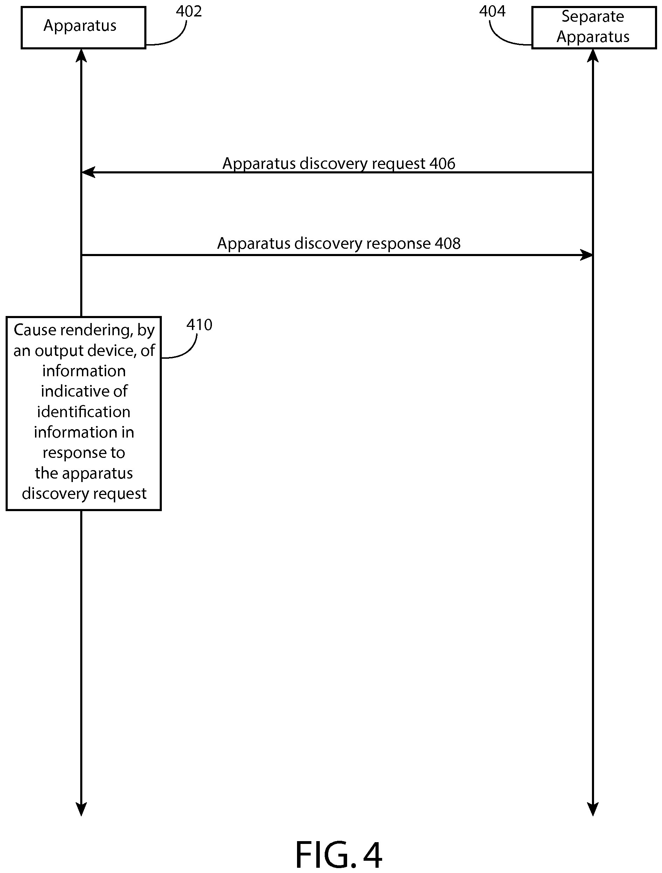

FIGURE 4 is an interaction diagram illustrating activities associated with causing rendering of information indicative of apparatus identification information according to at least one example embodiment. In at least one example embodiment, there is a set of operations that corresponds with, at least some of, the activities of FIGURE 4. For example, there may be a set of operations associated with activities of one or more apparatuses of FIGURE 4. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 4.

As discussed previously, in many circumstances, a user may be in possession of several electronic apparatuses which may be capable of interoperability, which may be paired to one another, and/or the like. For example, a user may desire to utilize a tablet computer in conjunction with a display. As such, the user may desire for a paired relationship to be established between the tablet computer and the display. In such an example, the user may be proximate to a headset, another headset, and three displays, a display, another display, a different display, and/or the like. In such an example, the three displays may be similarly configured, may be of the same brand and/or model, and/or the like. In such an example, the user may desire to utilize a particular display, for example, the display that is sitting on the user's desk. As such, the user may desire to have a paired relationship established between the tablet computer and the display that is sitting on the user's desk, and to avoid establishment of a paired relationship between the tablet computer and the other two displays. In this manner, it may be desirable to configure an apparatus such that a user of the apparatus may readily distinguish the apparatus from another apparatus, from a different apparatus, and/or the like, such that the user may identify the user's desire to have a paired relationship established with the particular apparatus. As such, it may be desirable to perform one or more operations which may facilitate user identification of a particular apparatus, distinguishment of an apparatus from another apparatus, and/or the like. In at least one example embodiment, an apparatus causes rendering, by an output device, of information indicative of identification information, such as the apparatus identification information discussed regarding FIGURES 3A-3C, separate apparatus identification information, and/or the like. In such an example embodiment, the causation of rendering of the information indicative of the identification information may be in response to the apparatus discovery request. In such an example embodiment, the causation of rendering of the information indicative of the identification information may comprise rendering of the information indicative of the apparatus identification information, rendering of information indicative of the separate apparatus identification information, and/or the like. The output device may be an output device that allows for user perception of the rendering of the information indicative of the identification information. For example, the output device may be similar as described regarding FIGURE 1.

For example, in continuation of the previous example, the user's tablet computer may discover the various apparatuses with which the tablet computer may communicate with, pair with, and/or the like. In such an example, the tablet computer may communicate apparatus discovery request to the headset, the other headset, the display, the other display, the different display, and/or the like. In order to facilitate user identification of a particular apparatus, the headset, the other headset, the display, the other display, the different display, the tablet computer, and/or the like, may cause rendering of information indicative of its respective identification information in response to the received apparatus discovery request. In this manner, the user may distinguish between the various apparatuses, may identify the particular display that is sitting on the user's desk, and/or the like, in order to facilitate establishment of a paired relationship with the particular display.

In at least one example embodiment, the rendering of the information indicative of the identification information comprises generation of a signal based, at least in part, on the apparatus identification information. In such an example embodiment, the signal may be generated such that the signal is configured to actuate the output device in a manner that provides for user comprehension of the apparatus identification information by way of the output device. User comprehension of the apparatus identification information may indicate that a user may read textual information associated with the apparatus identification information, hear auditory information that indicates the apparatus identification information, perceive graphical information that represents the apparatus identification information, and/or the like. In at least one example embodiment, causation of actuation of the output device in a manner that provides for user comprehension of the apparatus identification information by way of the output device is based, at least in part, on the generation of the signal.

In many circumstances, different apparatuses may comprise different output devices. For example, an apparatus may comprise a speaker and fail to comprise a display, another apparatus may comprise a speaker and a display, and a different apparatus may comprise a display and fail to comprise a speaker. In such an example, it may be desirable to configure an apparatus such that the generated signal may actuate an output device that is comprised by the apparatus. In at least one example embodiment, the signal comprises an audio signal, a visual signal, and/or the like. For example, the signal may comprise an audio signal. In such an example, the output device may be at least one speaker, and the actuation of the speaker may comprise actuation of the speaker such that the speaker produces sound waves indicative of the audio signal. In such an example, the audio signal may comprise information indicative of a spoken language representation of the apparatus identification information.

In another example, the signal may comprise a visual signal. In such an example, the output device may be a display, and the actuation of the display may comprise actuation of the display such that the display displays visual information indicative of the visual signal. In another example, the signal may comprise a visual signal, the output device may be at least one indicator, and the actuation of the indicator may comprise actuation of the indicator such that the indicator indicates visual information indicative of the visual signal. In at least one example embodiment, a visual signal may comprise a graphical signal, a textual signal, and/or the like. For example, the visual signal may comprise a graphical signal. In such an example, the graphical signal may comprise information indicative of a video representation of the apparatus identification information, an image representation of the apparatus identification information, a symbol representation of the apparatus identification information, and/or the like. In at least one example embodiment, the visual signal comprises a non-barcode graphical signal. In such an example embodiment, the non-barcode graphical signal may comprise a graphical signal that excludes information indicative of a barcode, such as a single-dimensional barcode, a multiple-dimensional barcode, such as a quick response code, and/or the like.

In another example, the visual signal may comprise a textual signal. In such an example, the textual signal may comprise information indicative of a textual representation of the apparatus identification information, information indicative of an arrangement of textual characters that are comprehendible by a user of the apparatus, and/or the like. In such an example embodiment, the textual representation of the apparatus identification information may be configured such that the textual representation may be read in conjunction with an optical character recognition functionality. For example, a user may desire to have a paired relationship established with a particular display. As such, the display may receive information indicative of an apparatus discovery request and, in response to the receipt of the apparatus discovery request, may actuate the display such that the display displays a textual representation of the apparatus identification information associated with the display. In this manner, a user of the separate apparatus may identify the apparatus by way of the apparatus identification information received by way of an apparatus discovery response. For example, the separate apparatus may discover the apparatus by way of communicating an apparatus discovery request to the apparatus, and receiving an apparatus discovery response that comprises apparatus identification information from the apparatus. In such an example, the apparatus may cause rendering, in response to the apparatus discovery request, of information indicative of the apparatus identification information, and the separate apparatus may similarly cause rendering of information indicative of the apparatus identification information. In this manner, the user may be able to identify that the apparatus is the particular apparatus that the user desires to utilize in conjunction with the separate apparatus, and may indicate such a desire by way of the apparatus identification information rendered by way of the separate apparatus. In some circumstances, a user may utilize a separate apparatus that comprises a camera module to read and/or detect the textual representation of the apparatus identification information such that a paired relationship is established between the display and the user's apparatus.

In some circumstances, an apparatus may comprise the output device. In such circumstances, the apparatus may actuate the output device in conformance with the generated signal such that a user may comprehend the pertinent apparatus identification information. In some circumstances, the output device may be separate from the apparatus. In such circumstance, the causation of rendering of the information indicative of the apparatus identification information may comprise sending of the rendered information indicative of the apparatus identification information to the output device. For example, the apparatus may be a wireless headphone adapter that may facilitate utilization of a pair of conventional wired headphones in a wireless manner with another apparatus. In such an example, the wireless headphone adapter may fail to comprise an output device, and the conventional wired headphones communicatively coupled to the wireless headphone adapter may comprise an output device, such as a speaker. As such, the wireless headphone adapter may send the rendered information indicative of the apparatus identification information to the output device comprised by the conventional wired headphones such that the output device is actuated in conformance with the rendered information, in conformance with the generated signal, and/or the like.

In many circumstances, it may be desirable to effect such rendering of information indicative of apparatus identification information in an automatic fashion based, at least in part, on the receipt of an apparatus discovery request. For example, the causation of rendering of the information indicative of the apparatus identification information may be performed absent a rendering directive from the separate apparatus. In such an example, the separate apparatus may send the apparatus discovery request to the apparatus absent any additional directive that requests the rendering of information indicative of the requested apparatus identification information. In this manner, the separate apparatus may cause such rendering of information based solely on its request for apparatus identification information, and the separate apparatus may fail to need additional configuration to effect such rendering.

As described previously, in many circumstances, a user may desire to have a paired relationship established with a particular apparatus, despite the fact that a plurality of compatible apparatuses may be available for connection. As such, the user may desire to avoid establishment of a paired relationship with an apparatus prior to rendering, by way of an output device, of information indicative of the apparatus identification information associated with each respective apparatus. In this manner, the user may avoid establishment of a paired relationship with apparatuses that the user fails to desire such a paired relationship to be established with. As such, in at least one example embodiment, the causation of rendering of the information indicative of the apparatus identification information is performed absent a paired relationship between the apparatus and the separate apparatus. For example, the causation of rendering of the information indicative of the apparatus identification information may be performed prior to establishment of a paired relationship between the apparatus and the separate apparatus. In such an example, subsequent to the rendering of the information indicative of the apparatus identification information, a paired relationship between the apparatus and the separate apparatus may be established. In such an example, the user may identify a particular apparatus, may designate a particular apparatus with which to establish a paired relationship with by way of the user's separate apparatus, and/or the like. For example, a user's phone may be capable of establishing a paired relationship with the user's headset and the user's display. In such an example, the user may desire to have a paired relationship established between the phone and the headset. As such, the user may indicate such a desire by way of an input associated with the user's phone that selects the headset. In this manner, a paired relationship may be established between the phone and the headset.

In the example of FIGURE 4, apparatus 402 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 4, apparatus 404 may be similar as described regarding apparatus 202 of FIGURE 2A, apparatus 222 of FIGURE 2B, and/or the like.

At interaction 406, apparatus 402 receives information indicative of an apparatus discovery request from separate apparatus 404. In this manner, separate apparatus 404 may send the information indicative of the apparatus discovery request to apparatus 402. The receipt and the apparatus discovery request may be similar as described regarding FIGURES 2A-2B and FIGURES 3A-3C.

At interaction 408, apparatus 402 sends an apparatus discovery response to separate apparatus 404. In at least one example embodiment, the apparatus discovery response comprises apparatus identification information. In at least one example embodiment, the sending of the apparatus discovery response to separate apparatus 404 is in response to the apparatus discovery request. In this manner, separate apparatus 404 may receive the apparatus discovery response from apparatus 402. The sending, the apparatus discovery response, and the apparatus identification information may be similar as described regarding FIGURES 2A-2B and FIGURES 3A-3C.

At block 410, separate apparatus 402 causes rendering, by an output device, of information indicative of identification information. The identification information may be apparatus identification information, separate apparatus identification, and/or the like. In at least one example embodiment, the causation of rendering of the information indicative of the identification information is in response to the apparatus discovery request.

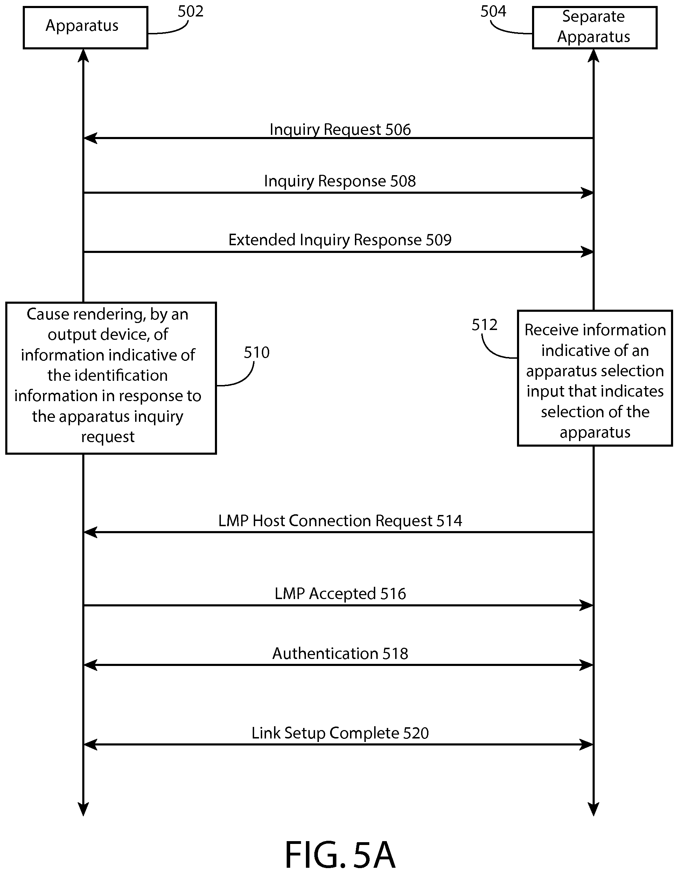

FIGURE 5A is an interaction diagram illustrating activities associated with causing rendering of information indicative of apparatus identification information according to at least one example embodiment. In at least one example embodiment, there is a set of operations that corresponds with, at least some of, the activities of FIGURE 5A. For example, there may be a set of operations associated with activities of one or more apparatuses of FIGURE 5A. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 5A.

In the example of FIGURE 5A, apparatus 502 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 5A, separate apparatus 504 may be similar as described regarding apparatus 202 of FIGURE 2A, apparatus 222 of FIGURE 2B, and/or the like.

At interaction 506, apparatus 502 receives information indicative of an inquiry request from separate apparatus 504. In this manner, separate apparatus 504 may send the information indicative of the inquiry request to apparatus 502. The receipt of information and the inquiry request may be similar as described regarding FIGURES 2A-2B, FIGURES 3A-3C, FIGURE 4, and FIGURES 5A-5B.

At interaction 508, apparatus 502 sends an inquiry response to separate apparatus 504. In at least one example embodiment, the sending of the inquiry response to separate apparatus 504 is in response to the inquiry request. In this manner, separate apparatus 504 may receive the inquiry response from apparatus 502. The sending of information and the inquiry response may be similar as described regarding FIGURES 2A-2B, FIGURES 3A-3C, FIGURE 4, and FIGURES 5A-5B.

At interaction 509, apparatus 502 sends an extended inquiry response to separate apparatus 504. In at least one example embodiment, the sending of the extended inquiry response to separate apparatus 504 is in response to the inquiry request, the inquiry response, and/or the like. In at least one example embodiment, the inquiry response may comprise the extended inquiry response. In this manner, separate apparatus 504 may receive the extended inquiry response from apparatus 502. The sending of information and the extended inquiry response may be similar as described regarding FIGURES 2A-2B, FIGURES 3A-3C, FIGURE 4, and FIGURES 5A-5B.

At block 510, apparatus 502 causes rendering, by an output device, of information indicative of identification information in response to the inquiry request. The identification information may be apparatus identification information, separate apparatus identification, and/or the like. The causation of rendering, the output device, and the information indicative of the identification information may be similar as described regarding FIGURE 4.

At block 512, separate apparatus 504 receives information indicative of an apparatus selection input that indicates selection of apparatus 502. The apparatus selection input may be similar as described regarding block 310 of FIGURE 3A.

In some circumstances, a link setup between apparatus 502 and separate apparatus 504 may be initiated. For example, apparatus 502 may communicate information indicative of the link setup to separate apparatus 504, separate apparatus 504 may communicate information indicative of the initiation of the link setup to apparatus 502, and/or the like. In at least one example embodiment, the link setup refers to apparatus 502 paging separate apparatus 504, separate apparatus 504 paging apparatus 502, establishment of a temporary communication channel between apparatus 502 and separate apparatus 504, and/or the like. In this manner, the link setup may facilitate establishment of a communication channel between apparatus 502 and separate apparatus 504 for purposes relating to establishment of a paired relationship between apparatus 502 and separate apparatus 504.

At interaction 514, apparatus 502 receives information indicative of a link manager protocol host connection request (LMP_host_connection_req) from separate apparatus 504. In this manner, separate apparatus 504 may send the information indicative of the link manager protocol host connection request (LMP_host_connection_req) to apparatus 502. In at least one example embodiment, a link manager protocol host connection request is a request to establish a paired relationship between an apparatus and another apparatus.

At interaction 516, apparatus 502 sends information indicative of a link manager protocol host connection response (LMP_host_connection_res) to separate apparatus 504. In this manner, separate apparatus 504 may receive the information indicative of the link manager protocol host connection response (LMP_host_connection_res) from apparatus 502. In at least one example embodiment, a link manager protocol host connection response is a response that indicates acceptance of a link manager protocol host connection request (LMP_accepted), rejection of a link manager protocol host connection request (LMP_not_accepted), and/or the like. For example, the link manager protocol host connection response may indicate acceptance of the link manager protocol host connection request (LMP accepted) such that the apparatus and the separate apparatus may exchange information associated with establishment of a paired relationship between the apparatus and the separate apparatus, such as exchange of authentication information, for example, encryption keys, device identifications, link keys, and/or the like.

At interaction 518, authentication information is communicated between apparatus 502 and separate apparatus 504. For example, apparatus 502 may send authentication information to separate apparatus 504 such that separate apparatus 504 receives the authentication information from apparatus 502. Similarly, for example, separate apparatus 504 may send authentication information to apparatus 502 such that apparatus 502 receives the authentication information from separate apparatus 504. The communicated authentication information may, for example, comprise information indicative of one or more encryption keys, one or more device identifications, one or more link keys, and/or the like.

At interaction 520, link setup between apparatus 502 and separate apparatus 504 is complete. For example, apparatus 502 may communicate information indicative of the completion of the link setup to separate apparatus 504, separate apparatus 504 may communicate information indicative of the completion of the link setup to apparatus 502, and/or the like. In at least one example embodiment, completion of the link setup refers to establishment of a paired relationship between apparatus 502 and separate apparatus 504.

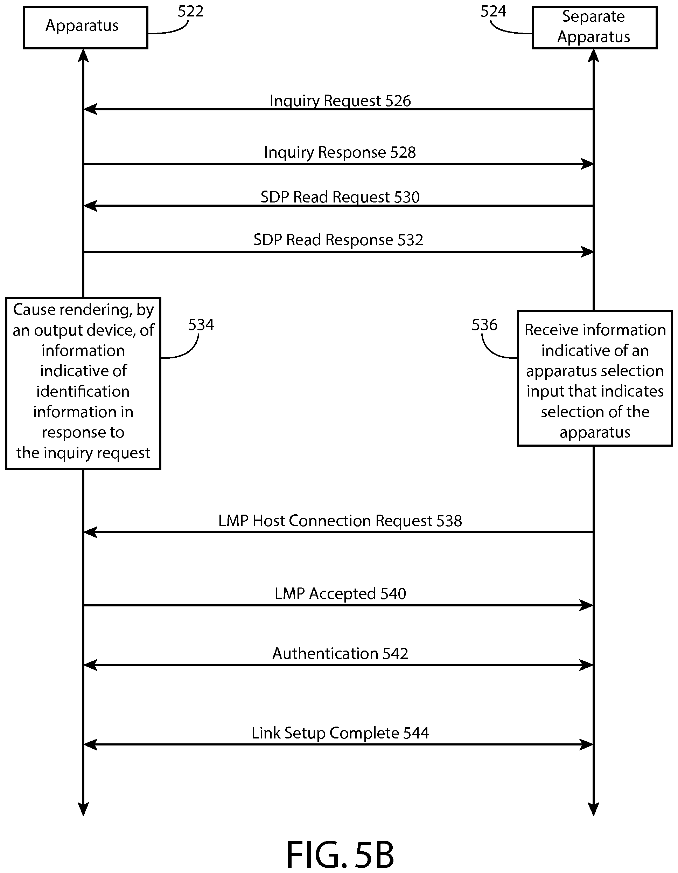

FIGURE 5B is an interaction diagram illustrating activities associated with causing rendering of information indicative of apparatus identification information according to at least one example embodiment. In at least one example embodiment, there is a set of operations that corresponds with, at least some of, the activities of FIGURE 5B. For example, there may be a set of operations associated with activities of one or more apparatuses of FIGURE 5B. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 5B.

In the example of FIGURE 5B, apparatus 522 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 5B, apparatus 524 may be similar as described regarding apparatus 202 of FIGURE 2A, apparatus 222 of FIGURE 2B, and/or the like.

At interaction 526, apparatus 522 receives information indicative of an inquiry request from separate apparatus 524. In this manner, separate apparatus 524 may send the information indicative of the inquiry request to apparatus 522. The receipt of information and the inquiry request may be similar as described regarding FIGURES 2A-2B, FIGURES 3A-3C, FIGURE 4, and FIGURES 5A-5C.

At interaction 528, apparatus 522 sends an inquiry response to separate apparatus 524. In at least one example embodiment, the sending of the inquiry response to separate apparatus 524 is in response to the inquiry request. In this manner, separate apparatus 524 may receive the inquiry response from apparatus 522. The sending of information and the inquiry response may be similar as described regarding FIGURES 2A-2B, FIGURES 3A-3C, FIGURE 4, and FIGURES 5A-5C.

At interaction 530, apparatus 522 receives information indicative of a service discovery protocol read request from separate apparatus 524. In this manner, separate apparatus 524 may send the information indicative of the service discovery protocol read request to apparatus 522. The receipt of information and the service discovery protocol read request may be similar as described regarding FIGURES 2A-2B and FIGURES 3A-3C.

At interaction 532, apparatus 522 sends a service discovery protocol read response to separate apparatus 524. In at least one example embodiment, the service discovery protocol read response comprises apparatus identification information. In at least one example embodiment, the sending of the service discovery protocol read response to separate apparatus 524 is in response to the service discovery protocol read request. In this manner, separate apparatus 524 may receive the service discovery protocol read response from apparatus 522. The sending of information, the service discovery protocol read response, and the apparatus identification information may be similar as described regarding FIGURES 2A-2B and FIGURES 3A-3C.

At block 534, apparatus 522 causes rendering, by an output device, of information indicative of identification information in response to the inquiry request. The identification information may be apparatus identification information, separate apparatus identification, and/or the like. The causation of rendering, the output device, and the information indicative of the identification information may be similar as described regarding FIGURE 4.

At block 536, separate apparatus 524 receives information indicative of an apparatus selection input that indicates selection of apparatus 522. The apparatus selection input may be similar as described regarding block 310 of FIGURE 3A.

In some circumstances, a link setup between apparatus 522 and separate apparatus 524 may be initiated. For example, apparatus 522 may communicate information indicative of the link setup to separate apparatus 524, separate apparatus 524 may communicate information indicative of the initiation of the link setup to apparatus 522, and/or the like. In at least one example embodiment, the link setup refers to apparatus 522 paging separate apparatus 524, separate apparatus 524 paging apparatus 522, establishment of a temporary communication channel between apparatus 522 and separate apparatus 524, and/or the like. In this manner, the link setup may facilitate establishment of a communication channel between apparatus 522 and separate apparatus 524 for purposes relating to establishment of a paired relationship between apparatus 522 and separate apparatus 524.

At interaction 538, apparatus 522 receives information indicative of a link manager protocol host connection request (LMP_host_connection_req) from separate apparatus 524. In this manner, separate apparatus 524 may send the information indicative of the link manager protocol host connection request (LMP_host_connection_req) to apparatus 522. In at least one example embodiment, a link manager protocol host connection request is a request to establish a paired relationship between an apparatus and another apparatus.

At interaction 540, apparatus 522 sends information indicative of a link manager protocol host connection response (LMP_host_connection_res) to separate apparatus 524. In this manner, separate apparatus 524 may receive the information indicative of the link manager protocol host connection response (LMP_host_connection_res) from apparatus 522. In at least one example embodiment, a link manager protocol host connection response is a response that indicates acceptance of a link manager protocol host connection request (LMP_accepted), rejection of a link manager protocol host connection request (LMP_not_accepted), and/or the like. For example, the link manager protocol host connection response may indicate acceptance of the link manager protocol host connection request (LMP accepted) such that the apparatus and the separate apparatus may exchange information associated with establishment of a paired relationship between the apparatus and the separate apparatus, such as exchange of authentication information, for example, encryption keys, device identifications, link keys, and/or the like.

At interaction 542, authentication information is communicated between apparatus 522 and separate apparatus 524. For example, apparatus 522 may send authentication information to separate apparatus 524 such that separate apparatus 524 receives the authentication information from apparatus 522. Similarly, for example, separate apparatus 524 may send authentication information to apparatus 522 such that apparatus 522 receives the authentication information from separate apparatus 524. The communicated authentication information may, for example, comprise information indicative of one or more encryption keys, one or more device identifications, one or more link keys, and/or the like.

At interaction 544, link setup between apparatus 522 and separate apparatus 524 is complete. For example, apparatus 522 may communicate information indicative of the completion of the link setup to separate apparatus 524, separate apparatus 524 may communicate information indicative of the completion of the link setup to apparatus 522, and/or the like. In at least one example embodiment, completion of the link setup refers to establishment of a paired relationship between apparatus 522 and separate apparatus 524.

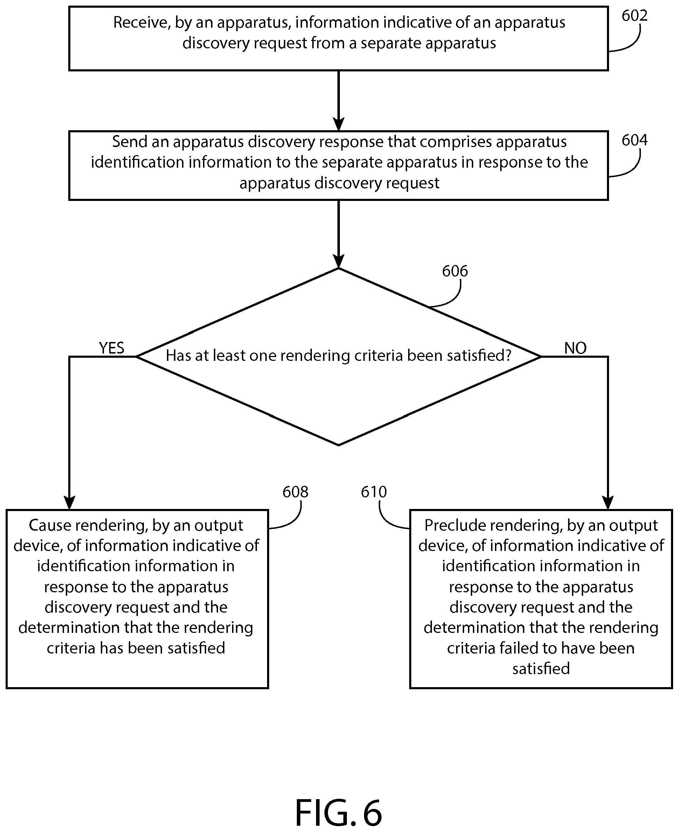

FIGURE 6 is a flow diagram illustrating activities associated with determining whether at least one rendering criteria has been satisfied according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 6.

As previously discussed, in many circumstances, it may be desirable to cause rendering, by way of an output device, of information indicative of apparatus identification information in order to facilitate identification of a particular apparatus. In some circumstances, however, a user may desire to cause such rendering on certain apparatuses, and to avoid such rendering on different apparatus. For example, the user may desire to utilize an apparatus which is proximate to the user, which is in the user's possession, which is of a particular type, which offers a particular service, which comprises a particular output device, and/or the like. In this manner, the rendering of information indicative of apparatus identification information by way of an output device may be conditional upon one or more criteria. A criteria, for example, may designate one or more values, factors, circumstances, and/or the like, upon which the rendering of the information may be conditioned. In at least one example embodiment, an apparatus determines that at least one rendering criteria has been satisfied. Such a determination may be in response to an apparatus discovery request, receipt of information indicative of an apparatus discovery request, and/or the like. In such an example embodiment, the causation of rendering of the apparatus identification information may be performed in response to the determination that the rendering criteria has been satisfied. In such an example embodiment, the rendering criteria may be a criteria that, when satisfied, causes the rendering of the information indicative of the apparatus identification information by way of an output device.

In some circumstances, a user may desire to conditionally cause rendering of information indicative of apparatus identification information based, at least in part, on one or more situational characteristics, circumstantial parameters, and/or the like. In at least one example embodiment, rendering criteria comprises at least one circumstantial rendering criteria. In such an example embodiment, the circumstantial rendering criteria may indicate at least one circumstance associated with the apparatus, and satisfaction of the circumstantial rendering criteria may be indicative of occurrence of the circumstance. For example, the circumstance may indicate a scenario in which a parameter may be associated with a particular value, and satisfaction of the circumstance may indicate that the parameter is associated with the particular value. In such an example, the rendering of the information may be conditional upon the parameter being associated with the particular value. As such, in circumstances in which the parameter is associated with the particular value, the circumstance may be determined to be satisfied, and the apparatus may cause rendering of the information.

As previously discussed, in many circumstances, a user may have a plurality of apparatuses at the user's disposal. In such circumstances, the user may desire to quickly and easily identify a specific apparatus with which the user desires to establish a pairing relation with another apparatus. In such circumstances, if the user is closer to a particular set of apparatuses than a different apparatus, the user may desire to have information indicative of apparatus identification information rendered on each respective apparatus of the particular set of apparatuses, and to avoid rendering such information on the different apparatus that the user may not be close to. In such an example, the rendering of the information may be based, at least in part, on proximity between an apparatus and a separate apparatus. In this manner, a closer proximity to an apparatus may indicate that the user desires to utilize the apparatus, and a further proximity from a different may indicate that the user fails to desire to utilize the different apparatus. In at least one example embodiment, a circumstantial rendering criteria indicates a proximity circumstance. In such an example embodiment, satisfaction of the circumstantial rendering criteria may be indicative of occurrence of the proximity circumstance. In at least one example embodiment, a proximity circumstance is associated with an apparatus being proximate to a separate apparatus. In such an example embodiment, the determination that the proximity circumstance has been satisfied may comprise determination that the apparatus is proximate to the separate apparatus.

In at least one example embodiment, the determination that the apparatus is proximate to the separate apparatus is based, at least in part, on a received signal strength indicator. A received signal strength indicator, for example, may be a metric that indicates a quantitative, qualitative, relative, absolute, and/or the like characteristic of the signal strength received by an apparatus from a separate apparatus. As such, it may be inferred that a separate apparatus associated with a greater received signal strength indicator may be closer to the apparatus, and a different separate apparatus associated with a lesser received signal strength indicator may be further from the apparatus. As such, the received signal strength indicator may be utilized in the determination of proximity between an apparatus and a separate apparatus. For example, a received signal strength indicator may be determined to satisfy a received signal strength indicator proximity threshold. In such an example, the determination that the apparatus is proximate to the separate apparatus may be based, at least in part, on the received signal strength indicator satisfying the received signal strength indicator proximity threshold.

In some circumstances, it may be desirable to utilize additional sources of information regarding the proximity of two apparatuses. In at least one example embodiment, an apparatus receives information indicative of a distance between the apparatus and a separate apparatus. In such an example embodiment, the determination that the apparatus is proximate to the separate apparatus may be based, at least in part, on the distance. The information indicative of the distance between the apparatus and the separate apparatus may be received from at least one sensor, such as a proximity sensor, a location sensor, any sensor operable to detect information associated with the proximity of an apparatus and a separate apparatus, and/or the like. In this manner, rendering of information indicative of apparatus identification information may be avoid on apparatuses which may be out of view of the user, which may be in an apartment adjacent to the user's apartment, and/or the like.

In some circumstances, rendering of information may be conditional upon a temporal circumstance. In such circumstances, a circumstantial rendering criteria may indicate a temporal circumstance, and satisfaction of the circumstantial rendering criteria may be indicative of occurrence of the temporal circumstance. For example, subsequent to pairing a particular apparatus with a separate apparatus, the user may power the apparatus on, may make the apparatus operational, and/or the like. For example, a user may purchase a new headset and bring the headset home with the user. In such an example, the user may also have two additional headsets, and the user's roommate may also have a headset. In such an example, the user may power on the newly purchased headset and desire to have a paired relationship established between the newly purchased headset and a separate apparatus, such as a phone. As such, a temporal circumstance associated with the powering on of the headset may indicate that the user desires to utilize the recently operational headset. In at least one example embodiment, a temporal circumstance is associated with the apparatus becoming operational within a predetermined duration prior to the determination that the rendering criteria has been satisfied. In such an example embodiment, the determination that the temporal circumstance has been satisfied comprises determination that the apparatus became operational within the predetermined duration prior to the determination that the rendering criteria has been satisfied. An apparatus becoming operational may refer to the apparatus being powered on, being activated, being woken from a sleep state, and/or the like.

In some circumstances, a user may desire to pair an apparatus with another apparatus based, at least in part, on an existence of an established paired relationship. For example, a user may desire to utilize a phone in conjunction with one of two displays. In such an example, one display may currently be associated with an established paired relationship with a tablet, and the other display may fail to be associated with an established paired relationship. In such an example, the user may prefer to establish a paired relationship with the other display based, at least in part, on the other display failing to be associated with an existing paired relationship. As such, the rendering of information may be condition upon a paired relationship circumstance. In such circumstances, a circumstantial rendering criteria may indicate a paired relationship circumstance, and satisfaction of the circumstantial rendering criteria may be indicative of occurrence of the paired relationship circumstance. For example, a paired relationship circumstance may be associated with the apparatus failing to have a paired relationship prior to the determination that the rendering criteria has been satisfied, and the determination that the paired relationship circumstance has been satisfied may comprise determination that the apparatus failed to have a paired relationship prior to the determination that the rendering criteria has been satisfied.

In some circumstances, a user may desire to conditionally cause rendering of information indicative of apparatus identification information based, at least in part, on one or more characteristics of an apparatus, one or more properties of an apparatus, availability of services provided an apparatus, on one or more characteristics of a separate apparatus, one or more properties of a separate apparatus, availability of services provided by the separate apparatus, and/or the like. As such, in at least one example embodiment, a rendering criteria comprises at least one separate apparatus rendering criteria. In such an example embodiment, the separate apparatus rendering criteria may indicate at least one circumstance associated with the separate apparatus. In such an example embodiment, satisfaction of the separate apparatus rendering criteria may be indicative of occurrence of the circumstance. For example, satisfaction of the separate apparatus rendering criteria may indicate that the separate apparatus is configured to provide a service indicated by the separate apparatus rendering criteria, the separate apparatus is of an apparatus type that is indicated in the separate apparatus rendering criteria, and/or the like.

For example, in some circumstances, a user's apparatus may be configured to be paired to a headset, but fails to be configured to be paired to a display. In such an example, the user may desire to avoid rendering of information indicative of apparatus identity information on the display based, at least in part, on the user's apparatus failing to support utilization of the display. In at least one example embodiment, a separate apparatus rendering criteria indicates a service capability circumstance, and satisfaction of the separate apparatus rendering criteria is indicative of occurrence of the service capability circumstance. For example, the service capability circumstance may be associated with the separate apparatus being configured to provide at least one service that complies with the service capability circumstance. In such an example, the determination that the service capability circumstance has been satisfied may comprise determination that the separate apparatus is configured to provide the service that complies with the service capability circumstance. The service may, for example, be an audio service, a visual service, a tactile service, and/or the like. In order to facilitate such a determination, it may be desirable to receive information that indicates services and/or capabilities of the separate apparatus. For example, the apparatus may send a service information request to the separate apparatus. In such an example, the apparatus may receive a service information response that indicates at least one service that the separate apparatus is configured to provide. In such an example, the service information request may comprise a service discovery protocol read request, and the service information response may comprise a service discovery protocol read response, similar as described regarding FIGURES 3A-3C and FIGURES 5A-5C. In such an example, the determination that the rendering criteria has been satisfied may be based, at least in part, on the service information response.

For example, a user may utilize the user's phone to display images associated with an image gallery application by way of a display comprised by the phone. In such an example, the user may desire to connect the phone to an external display such that the user may view the images by way of the external display. In such an example, the user may be proximate to the external display that is configured to support a visual service, and a headset that is configured to support an audio service. In such an example, based, at least in part, on the user's utilization of the image gallery application, the external display being configured to support a visual service, and the headset being configured to support an audio service, the external display may be caused to render information indicative of the apparatus identity information that identifies the external display, and the headset may be precluded from rendering information indicative of the apparatus identity information that identifies the headset. For example, one or more rendering criteria associated with the external display may be satisfied such that the external display is caused to render information indicative of the apparatus identity information, and one or more rendering criteria associated with the headset may fail to be satisfied such that the headset is precluded from rendering such information. Similarly, in another example, the user may utilize the user's phone to listen to music by way of a music player application. In such an example, the user may desire to connect the phone to a headset such that the user may listen to the music by way of the headset. In such an example, based, at least in part, on the user's utilization of the music player application, the external display being configured to support a visual service, and the headset being configured to support an audio service, the headset may be caused to render information indicative of the apparatus identity information that identifies the headset, and the external display may be precluded from rendering information indicative of the apparatus identity information that identifies the external display. For example, one or more rendering criteria associated with the headset may be satisfied such that the headset is caused to render information indicative of the apparatus identity information, and one or more rendering criteria associated with the external display may fail to be satisfied such that the external display is precluded from rendering such information.

As discussed previously, in at least one example embodiment, an apparatus communicates with a separate apparatus by way of a wireless communication channel. For example, the apparatus may communicate with the separate apparatus by way of a Bluetooth communication channel. In such an example, the separate apparatus identification request may comprise a discovery request, similar as described regarding FIGURES 3A-3C, a service discovery protocol inquiry, a service discovery protocol read request, and/or the like, and the separate apparatus identification information may comprise a service discovery protocol read response, information indicative of a service discovery protocol record, and/or the like. In such an example, the service discovery protocol read response may comprise information indicative of at least one service that the separate apparatus is configured to provide. For example, the service discovery protocol read response may comprise information indicative of at least one profile associated with the separate apparatus, such as a generic headset profile, a display profile, information indicative of at least one service discovery protocol record, and/or the like. In such an example, the apparatus may determine one or more services that the separate apparatus is configured to provide based, at least in part, on the profile, the record, and/or the like, associated with the separate apparatus.

In some circumstances, a user may desire to conditionally cause rendering of information indicative of apparatus identification information based, at least in part, on a designation associated with the separate apparatus, such as an identity, a brand, a type, a model, and/or the like. For example, a user may desire to use an apparatus associated with a particular brand in conjunction with another apparatus. In such an example, the user may desire to use the apparatus in conjunction with another apparatus that is associate with the particular brand, for example, in order to facilitate interoperability between the apparatus and the other apparatus, in order to provide a seamless user experience across interfaces associated with the apparatus and the other apparatus, in order to utilize synergistic qualities associated with utilization of like-branded apparatuses, and/or the like.

As such, in at least one example embodiment, a separate apparatus rendering criteria indicates a separate apparatus identity circumstance, and satisfaction of the separate apparatus rendering criteria is indicative of occurrence of the separate apparatus identity circumstance. For example, a separate apparatus identity circumstance may be associated with the separate apparatus identity information identifying a particular separate apparatus property. In such an example, the determination that the separate apparatus identity circumstance has been satisfied may comprise determination that the separate apparatus identity information identifies the particular separate apparatus property. In such an example, the particular separate apparatus identity may indicate a type of separate apparatus, a model of separate apparatus, a brand of separate apparatus, a predetermined separate apparatus, and/or the like. In order to facilitate such a determination, it may be desirable to receive information that indicates an identity and/or a characteristic of the separate apparatus. For example, the apparatus may send a separate apparatus identification request to the separate apparatus. In such an example, the apparatus may receive separate apparatus identification information from the separate apparatus. In such an example, the determination that the rendering criteria has been satisfied may be based, at least in part, on the separate apparatus identification information. As discussed previously, in some circumstances, an apparatus may communicate with a separate apparatus by way of a Bluetooth communication channel. In such circumstances, the separate apparatus identification request may comprise an inquiry request and the separate apparatus identification information may comprise an inquiry response, similar as described regarding FIGURES 3A-3C.

In some circumstances, it may be desirable to automatically establish a paired relationship between an apparatus and a separate apparatus. For example, it may be desirable to cause establishment of such a paired relationship based, at least in part, on satisfaction of one or more rendering criteria. In at least one example embodiment, an apparatus causes establishment of a paired relationship between the apparatus and a separate apparatus based, at least in part, on the determination that the rendering criteria has been satisfied.

FIGURE 6 is a flow diagram illustrating activities associated with determining whether at least one rendering criteria has been satisfied according to at least one example embodiment.

At block 602, the apparatus receives information indicative of an apparatus discovery request from a separate apparatus. The receipt, the apparatus discovery request, and the separate apparatus may be similar as described regarding FIGURES 2A-2B, FIGURES 3A-3C, FIGURE 4, FIGURES 5A-5B, and FIGURE 7.

At block 604, the apparatus sends an apparatus discovery response to the separate apparatus in response to the apparatus identification request. In at least one example embodiment, the apparatus discovery response comprises apparatus identification information. The sending, the apparatus discovery response, and the apparatus identification information may be similar as described regarding FIGURES 2A-2B, FIGURES 3A-3C, FIGURE 4, FIGURES 5A-5B, and FIGURE 7.

At block 606, the apparatus determines whether at least one rendering criteria has been satisfied. If the apparatus determines that at least one rendering criteria has been satisfied, flow proceeds to block 608. If the apparatus determines that the rendering criteria has failed to have been satisfied, flow proceeds to block 610.

At block 608, the apparatus causes rendering, by an output device, of information indicative of identification information in response to the apparatus discovery request and the determination that the rendering criteria has been satisfied. The identification information may be apparatus identification information, separate apparatus identification, and/or the like. The causation of rendering, the output device, and the information indicative of the identification information may be similar as described regarding FIGURES 2A-2B, FIGURES 3A-3C, FIGURE 4, FIGURES 5A-5B, and FIGURE 7.

At block 610, the apparatus precludes rendering, by an output device, of information indicative of identification information in response to the apparatus discovery request and the determination that the rendering criteria failed to have been satisfied. The identification information may be apparatus identification information, separate apparatus identification, and/or the like. The preclusion of rendering, the output device, and the information indicative of the identification information may be similar as described regarding FIGURES 2A-2B, FIGURES 3A-3C, FIGURE 4, FIGURES 5A-5B, and FIGURE 7.

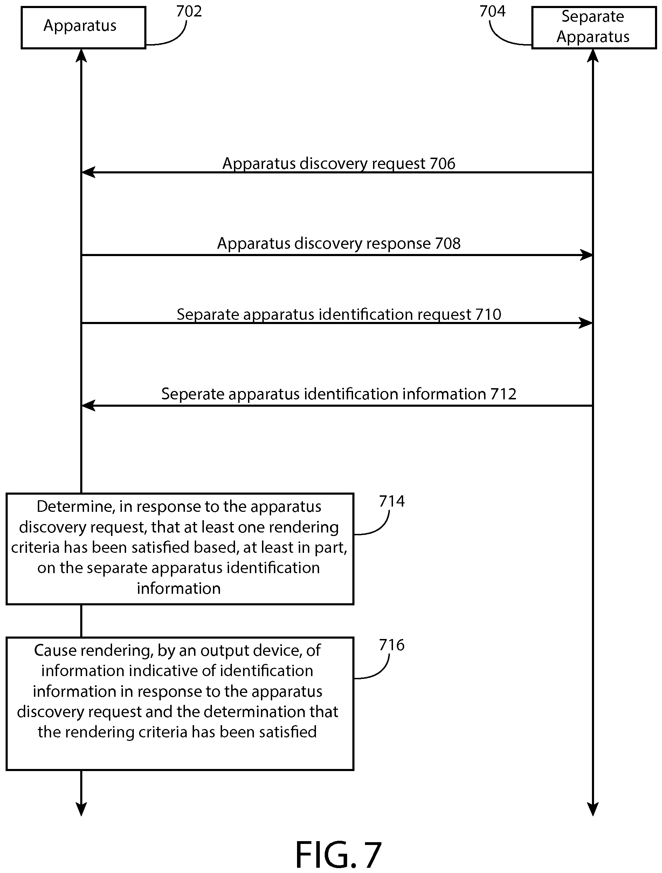

FIGURE 7 is an interaction diagram illustrating activities associated with determining that at least one rendering criteria has been satisfied according to at least one example embodiment. In at least one example embodiment, there is a set of operations that corresponds with, at least some of, the activities of FIGURE 7. For example, there may be a set of operations associated with activities of one or more apparatuses of FIGURE 7. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

In some circumstances, it may be desirable to identify a separate apparatus that an apparatus is in communication with. For example, it may be desirable for purposes relating to authentication of the separate apparatus, establishment of a communication channel between the apparatus and the separate apparatus, identification of one or more services provided by the separate apparatus, and/or the like. For example, in some circumstances, an apparatus may have insufficient information, received by way of an apparatus discovery request, inquiry request, and/or the like, to determine whether a rendering criteria has been satisfied, to cause rendering of separate apparatus identification information, to cause establishment of a paired relationship with the separate apparatus, and/or the like. In such an example, it may be desirable to receive additional information associated with the separate apparatus. In at least one example embodiment, an apparatus sends a separate apparatus identification request to the separate apparatus and, in response, receives separate apparatus identification information from the separate apparatus. The separate apparatus identification information may be any information that facilitates user identification of the separate apparatus, distinguishing of the separate apparatus from another separate apparatus, and/or the like. For example, in some circumstances, an apparatus may be unable to determine whether a specific rendering criteria has been satisfied based, at least in part, on the information received in conjunction with an apparatus discovery request, an inquiry request, a service discovery protocol read request, and/or the like. In such circumstances, the apparatus may send a separate apparatus identification request to the separate apparatus such that the apparatus may receive additional information associated with the separate apparatus. For example, the apparatus may utilize the received separate apparatus identification information in order to determine that a rendering criteria has been satisfied. In at least one example embodiment, an apparatus determines, in response to an apparatus discovery request, receipt of separate apparatus identification information, and/or the like, that at least one rendering criteria has been satisfied based, at least in part, on the separate apparatus identification information. For example, the apparatus may determine that a rendering criteria has been satisfied based, at least in part, on an identity of the separate apparatus, an address of the separate apparatus, and/or the like.

In the example of FIGURE 7, apparatus 702 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 7, apparatus 704 may be similar as described regarding apparatus 202 of FIGURE 2A, apparatus 222 of FIGURE 2B, and/or the like.

At interaction 706, apparatus 702 receives information indicative of an apparatus discovery request from separate apparatus 704. In this manner, separate apparatus 704 may send the information indicative of the apparatus discovery request to apparatus 702. The receipt and the apparatus discovery request may be similar as described regarding FIGURES 2A-2B, FIGURES 3A-3C, FIGURE 4, FIGURES 5A-5B, and FIGURE 6.

At interaction 708, apparatus 702 sends an apparatus discovery response to separate apparatus 704. In at least one example embodiment, the apparatus discovery response comprises apparatus identification information. In at least one example embodiment, the sending of the apparatus discovery response to separate apparatus 704 is in response to the apparatus discovery request. In this manner, separate apparatus 704 may receive the apparatus discovery response from apparatus 702. The sending, the apparatus discovery response, and the apparatus identification information may be similar as described regarding FIGURES 2A-2B, FIGURES 3A-3C, FIGURE 4, FIGURES 5A-5B, and FIGURE 6.

At interaction 710, apparatus 702 sends a separate apparatus identification request to separate apparatus 704. In at least one example embodiment, the sending of the separate apparatus identification request to separate apparatus 704 is in response to receipt of the apparatus discovery request, sending of the apparatus discovery response, and/or the like. In this manner, separate apparatus 704 may receive the separate apparatus identification request from apparatus 702. The sending and the separate apparatus identification request may be similar as described regarding FIGURES 2A-2B, FIGURES 3A-3C, FIGURE 4, FIGURES 5A-5B, and FIGURE 6.

At interaction 712, apparatus 702 receives separate apparatus identification information from apparatus 704. In this manner, separate apparatus 704 may send the separate apparatus identification information to apparatus 702 in response to receipt of the separate apparatus identification request from apparatus 702. The receipt and the separate apparatus identification information may be similar as described regarding FIGURES 2A-2B, FIGURES 3A-3C, FIGURE 4, FIGURES 5A-5B, and FIGURE 6.

At block 714, apparatus 702 determines, in response to the apparatus discovery request, that at least one rendering criteria has been satisfied based, at least in part, on the separate apparatus identification information. The determination and the rendering criteria may be similar as described regarding FIGURE 6.

At block 716, apparatus 702 causes rendering, by an output device, of information indicative of identification information. In at least one example embodiment, the causation of rendering of the information indicative of the identification information is in response to the apparatus discovery request and the determination that the rendering criteria has been satisfied. The identification information may be apparatus identification information, separate apparatus identification, and/or the like.

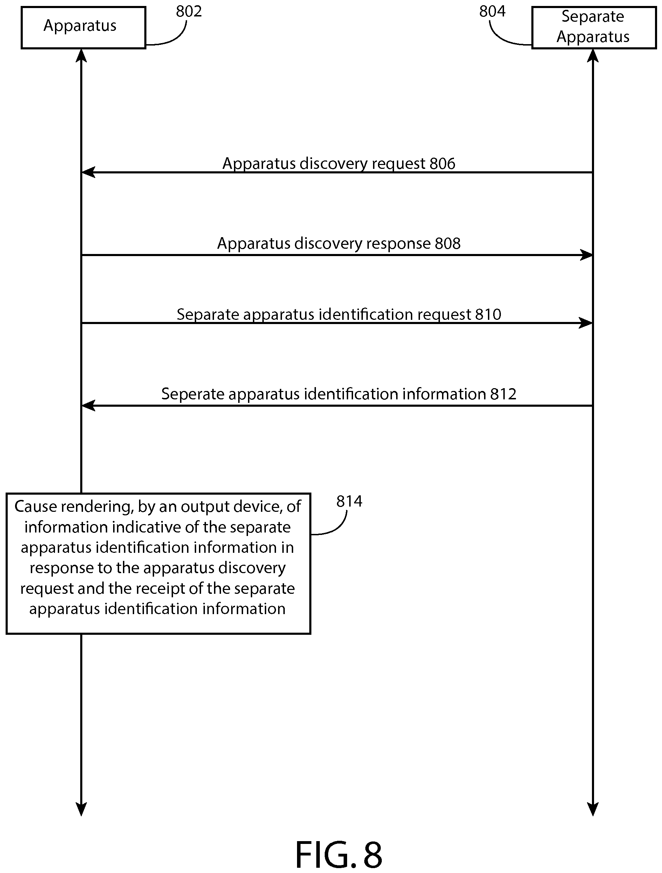

FIGURE 8 is an interaction diagram illustrating activities associated with causing rendering of information indicative of separate apparatus identification information according to at least one example embodiment. In at least one example embodiment, there is a set of operations that corresponds with, at least some of, the activities of FIGURE 8. For example, there may be a set of operations associated with activities of one or more apparatuses of FIGURE 8. An apparatus, for example electronic apparatus 10 of FIGURE 1, or a portion thereof, apparatus 202 of FIGURE 2A, or a portion thereof, apparatus 204 of FIGURE 2A, or a portion thereof, apparatus 222 of FIGURE 2B, or a portion thereof, apparatus 224 of FIGURE 2B, or a portion thereof, apparatus 226 of FIGURE 2B, or a portion thereof, or apparatus 228 of FIGURE 2B, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

In some circumstances, a user may desire to perceive information that indicates an identity of a separate apparatus that is in communication with the user's apparatus. For example, in addition to and/or in place of rendering, by way of an output device, of information indicative of apparatus identification information, it may be desirable to configure an apparatus such that the apparatus may render, by way of an output device, information indicative of separate apparatus identification information. For example, a user may desire to utilize the user's phone in conjunction with a display. In such an example, the display may be actuated such that the display displays information that indicates that the display has received an apparatus discovery request from the user's phone, that the display has received separate apparatus identification information from the user's phone, and/or the like. For example, the display may be actuated to display a textual message that informs the user that the user's phone desires to establish a paired relationship with the display. In at least one example embodiment, an apparatus receives an apparatus discovery request from a separate apparatus and, in response, sends an apparatus discovery response that comprises apparatus identification information to the separate apparatus. In such an example embodiment, it may be desirable to receive information that identifies the separate apparatus. As such, the apparatus may send a separate apparatus identification request to the separate apparatus and, in response, receive separate apparatus identification information from the separate apparatus. In such an example embodiment, the apparatus may cause rendering, by way of an output device, of information indicative of the separate apparatus identification information.

The separate apparatus identification information, the information indicative of the separate apparatus identification information, and the rendering of the information indicative of the separate apparatus identification information may be similar as described regarding the apparatus identification information, the information indicative of the apparatus identification information, and the rendering of the information indicative of the apparatus identification information, respectively. For example, the separate apparatus information may be any information that identifies at least one separate apparatus characteristic of the separate apparatus. A separate apparatus characteristic may, for example, be a name of the separate apparatus, a model designation of the separate apparatus, a brand of the separate apparatus, a manufacturer of the separate apparatus, a type of the separate apparatus, a descriptor of the separate apparatus, an identification number of the separate apparatus, and/or the like. In another example, the rendering of the information indicative of the separate apparatus identification information may comprise generation of a signal based, at least in part, on the separate apparatus identification information such that the signal is configured to actuate the output device in a manner that provides for user comprehension of the separate apparatus identification information by way of the output device. In such an example, the apparatus may cause actuation of the output device in a manner that provides for user comprehension of the separate apparatus identification information by way of the output device based, at least in part, on the generation of the signal.

In the example of FIGURE 8, apparatus 802 may be similar as described regarding apparatus 204 of FIGURE 2A, apparatus 224 of FIGURE 2B, apparatus 226 of FIGURE 2B, apparatus 228 of FIGURE 2B, and/or the like. In the example of FIGURE 8, apparatus 804 may be similar as described regarding apparatus 202 of FIGURE 2A, apparatus 222 of FIGURE 2B, and/or the like.

At interaction 806, apparatus 802 receives information indicative of an apparatus discovery request from separate apparatus 804. In this manner, separate apparatus 804 may send the information indicative of the apparatus discovery request to apparatus 802. The receipt and the apparatus discovery request may be similar as described regarding FIGURES 2A-2B, FIGURES 3A-3C, FIGURE 4, FIGURES 5A-5B, and FIGURE 6.

At interaction 808, apparatus 802 sends an apparatus discovery response to separate apparatus 804. In at least one example embodiment, the apparatus discovery response comprises apparatus identification information. In at least one example embodiment, the sending of the apparatus discovery response to separate apparatus 804 is in response to the apparatus discovery request. In this manner, separate apparatus 804 may receive the apparatus discovery response from apparatus 802. The sending, the apparatus discovery response, and the apparatus identification information may be similar as described regarding FIGURES 2A-2B, FIGURES 3A-3C, FIGURE 4, FIGURES 5A-5B, and FIGURE 6.

At interaction 810, apparatus 802 sends a separate apparatus identification request to separate apparatus 804. In at least one example embodiment, the sending of the separate apparatus identification request to separate apparatus 804 is in response to receipt of the apparatus discovery request, sending of the apparatus discovery response, and/or the like. In this manner, separate apparatus 804 may receive the separate apparatus identification request from apparatus 802. The sending and the separate apparatus identification request may be similar as described regarding FIGURES 2A-2B, FIGURES 3A-3C, FIGURE 4, FIGURES 5A-5B, and FIGURE 6.

At interaction 812, apparatus 802 receives separate apparatus identification information from apparatus 804. In this manner, separate apparatus 804 may send the separate apparatus identification information to apparatus 802 in response to receipt of the separate apparatus identification request from apparatus 802. The receipt and the separate apparatus identification information may be similar as described regarding FIGURES 2A-2B, FIGURES 3A-3C, FIGURE 4, FIGURES 5A-5B, and FIGURE 6.

At block 814, separate apparatus 802 causes rendering, by an output device, of information indicative of the separate apparatus identification information. In at least one example embodiment, the causation of rendering of the information indicative of the separate apparatus identification information is in response to the apparatus discovery request and the receipt of the separate apparatus identification information.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 410 of FIGURE 4 may be performed prior to interaction 408 of FIGURE 4. Furthermore, if desired, one or more of the above-described functions may be optional or may be combined. For example, block 512 of FIGURE 5A may be optional and/or combined with interaction 514 of FIGURE 5A.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
receiving, by a first apparatus (10, 204, 224, 226, 228, 402), an apparatus discovery request from a separate second apparatus (202, 222, 404);
sending an apparatus discovery response that comprises first apparatus identification information to the separate second apparatus (202, 222, 404) in response to the apparatus discovery request; and
causing, by the first apparatus (10, 204, 224, 226, 228, 402), rendering, by an output device (14), of information indicative of the first apparatus identification information in response to the apparatus discovery request,
wherein the output device (14) is a speaker, and the rendering of information indicative of the first apparatus identification information comprises generation of an audio signal based, at least in part, on the first apparatus identification information such that the audio signal is configured to actuate the speaker.

2. The method of Claim 1, wherein the causation of rendering of the information indicative of the first apparatus identification information is performed absent a rendering directive from the separate second apparatus (202, 222, 404).

3. The method of any of Claims 1-2, wherein the causation of rendering of the information indicative of the first apparatus identification information is performed absent a paired relationship between the first apparatus (10, 204, 224, 226, 228, 402) and the separate second apparatus (202, 222, 404).

4. The method of any of Claims 1-3, wherein the causation of rendering of the information indicative of the first apparatus identification information is performed prior to establishment of a paired relationship between the first apparatus (10, 204, 224, 226, 228, 402) and the separate second apparatus (202, 222, 404).

5. The method of any of Claims 1-4, further comprising causing actuation of the output device (14) in a manner that provides for user comprehension of the first apparatus identification information based, at least in part, on the generation of the audio signal.

6. The method of Claim 5, wherein the actuation of the speaker comprises actuation of the speaker such that the speaker produces sound waves indicative of the audio signal.

7. The method of any of Claims 1-6, wherein the audio signal comprises information indicative of a spoken language representation of the apparatus identification information.

8. The method of any of Claims 1-7, further comprising determination, in response to the apparatus discovery request, that at least one rendering criteria has been satisfied, wherein the causation of rendering of the first apparatus identification information is performed in response to the determination that the rendering criteria has been satisfied.

9. The method of Claim 8, wherein the rendering criteria comprises at least one circumstantial rendering criteria that indicates at least one circumstance associated with the first apparatus (10, 204, 224, 226, 228, 402), and satisfaction of the circumstantial rendering criteria is indicative of occurrence of the circumstance.

10. The method of any of Claims 1-9, wherein the first apparatus (10, 204, 224, 226, 228, 402) comprises the output device (14).

11. A first apparatus comprising:
means for receiving an apparatus discovery request from a separate second apparatus (202, 222, 404);
means for sending an apparatus discovery response that comprises first apparatus identification information to the separate second apparatus (202, 222, 404) in response to the apparatus discovery request; and
means for causing rendering, by an output device (14), of information indicative of the first apparatus identification information in response to the apparatus discovery request, wherein the output device (14) is a speaker,
and the rendering of information indicative of the first apparatus identification information comprises generation of an audio signal based, at least in part, on the first apparatus identification information such that the audio signal is configured to actuate the speaker.

12. The apparatus of Claim 11, wherein the first apparatus is one of a phone, a tablet, a computer, a wearable apparatus, a head worn apparatus, a hand worn apparatus, an electronic apparatus, a peripheral apparatus, and a host apparatus, and wherein the first apparatus identification information comprises at least one of a name of the apparatus, a brand of the apparatus, a manufacturer of the apparatus, a model designation of the apparatus, a descriptor of the apparatus, an identification number of the apparatus.

13. A computer readable medium comprising computer program code stored thereon, the computer readable medium and computer program code being configured to, when run on at least one processor of a first apparatus, perform the method of:
receiving an apparatus discovery request from a separate second apparatus (202, 222, 404);
sending an apparatus discovery response that comprises first apparatus identification information to the separate second apparatus (202, 222, 404) in response to the apparatus discovery request; and
causing rendering, by an output device (14), of information indicative of the first apparatus identification information in response to the apparatus discovery request, wherein the output device (14) is a speaker, and the rendering of information indicative of the first apparatus identification information comprises generation of an audio signal based, at least in part, on the first apparatus identification information such that the audio signal is configured to actuate the speaker.

## Patentansprüche

1. Verfahren, welches umfasst:
Empfangen, durch eine erste Vorrichtung (10, 204, 224, 226, 228, 402), einer Vorrichtungsermittlungsanfrage von einer separaten zweiten Vorrichtung (202, 222, 404);
Senden einer Vorrichtungsermittlungsantwort, welche erste Vorrichtungsidentifikationsinformationen umfasst, an die separate zweite Vorrichtung (202, 222, 404) in Reaktion auf die Vorrichtungsermittlungsanfrage; und
Bewirken, durch die erste Vorrichtung (10, 204, 224, 226, 228, 402), der Wiedergabe, durch eine Ausgabeeinrichtung (14), von Informationen, die auf die ersten Vorrichtungsidentifikationsinformationen schließen lassen, in Reaktion auf die Vorrichtungsermittlungsanfrage, wobei die Ausgabeeinrichtung (14) ein Lautsprecher ist und die Wiedergabe von Informationen, die auf die ersten Vorrichtungsidentifikationsinformationen schließen lassen, die Erzeugung eines Audiosignals umfasst, das wenigstens teilweise auf den ersten Vorrichtungsidentifikationsinformationen basiert, derart, dass das Audiosignal dafür ausgelegt ist, den Lautsprecher zu betätigen.

2. Verfahren nach Anspruch 1, wobei das Bewirken der Wiedergabe der Informationen, die auf die ersten Vorrichtungsidentifikationsinformationen schließen lassen, ohne Vorliegen eine Wiedergabeanweisung von der separaten zweiten Vorrichtung (202, 222, 404) durchgeführt wird.

3. Verfahren nach einem der Ansprüche 1-2, wobei das Bewirken der Wiedergabe der Informationen, die auf die ersten Vorrichtungsidentifikationsinformationen schließen lassen, ohne Vorliegen einer Paarbeziehung zwischen der ersten Vorrichtung (10, 204, 224, 226, 228, 402) und der separaten zweiten Vorrichtung (202, 222, 404) durchgeführt wird.

4. Verfahren nach einem der Ansprüche 1-3, wobei das Bewirken der Wiedergabe der Informationen, die auf die ersten Vorrichtungsidentifikationsinformationen schließen lassen, vor Herstellung einer Paarbeziehung zwischen der ersten Vorrichtung (10, 204, 224, 226, 228, 402) und der separaten zweiten Vorrichtung (202, 222, 404) durchgeführt wird.

5. Verfahren nach einem der Ansprüche 1-4, welches ferner das Bewirken der Betätigung der Ausgabeeinrichtung (14) auf eine Weise umfasst, welche die Verständlichkeit der ersten Vorrichtungsidentifikationsinformationen für den Benutzer wenigstens teilweise basierend auf der Erzeugung des Audiosignals gewährleistet.

6. Verfahren nach Anspruch 5, wobei die Betätigung des Lautsprechers eine solche Betätigung des Lautsprechers umfasst, dass der Lautsprecher Schallwellen erzeugt, die auf das Audiosignal schließen lassen.

7. Verfahren nach einem der Ansprüche 1-6, wobei das Audiosignal Informationen umfasst, die auf eine Darstellung der Vorrichtungsidentifikationsinformationen in gesprochener Sprache schließen lassen.

8. Verfahren nach einem der Ansprüche 1-7, welches ferner die Bestimmung umfasst, in Reaktion auf die Vorrichtungsermittlungsanfrage, dass wenigstens ein Wiedergabekriterium erfüllt worden ist, wobei das Bewirken der Wiedergabe der ersten Vorrichtungsidentifikationsinformationen in Reaktion auf die Bestimmung durchgeführt wird, dass das Wiedergabekriterium erfüllt worden ist.

9. Verfahren nach Anspruch 8, wobei das Wiedergabekriterium wenigstens ein umstandsbezogenes Wiedergabekriterium umfasst, welches wenigstens einen Umstand angibt, welcher der ersten Vorrichtung (10, 204, 224, 226, 228, 402) zugeordnet ist, und die Erfüllung des umstandsbezogenen Wiedergabekriteriums auf das Eintreten des Umstands schließen lässt.

10. Verfahren nach einem der Ansprüche 1-9, wobei die erste Vorrichtung (10, 204, 224, 226, 228, 402) die Ausgabeeinrichtung (14) umfasst.

11. Erste Vorrichtung, welche umfasst:
Mittel zum Empfangen einer Vorrichtungsermittlungsanfrage von einer separaten zweiten Vorrichtung (202, 222, 404);
Mittel zum Senden einer Vorrichtungsermittlungsantwort, welche erste Vorrichtungsidentifikationsinformationen umfasst, an die separate zweite Vorrichtung (202, 222, 404) in Reaktion auf die Vorrichtungsermittlungsanfrage; und
Mittel zum Bewirken der Wiedergabe, durch eine Ausgabeeinrichtung (14), von Informationen, die auf die ersten Vorrichtungsidentifikationsinformationen schließen lassen, in Reaktion auf die Vorrichtungsermittlungsanfrage, wobei die Ausgabeeinrichtung (14) ein Lautsprecher ist und die Wiedergabe von Informationen, die auf die ersten Vorrichtungsidentifikationsinformationen schließen lassen, die Erzeugung eines Audiosignals umfasst, das wenigstens teilweise auf den ersten Vorrichtungsidentifikationsinformationen basiert, derart, dass das Audiosignal dafür ausgelegt ist, den Lautsprecher zu betätigen.

12. Vorrichtung nach Anspruch 11, wobei die erste Vorrichtung eines von einem Telefon, einem Tablet, einem Computer, einer am Körper tragbaren Vorrichtung, einer am Kopf getragenen Vorrichtung, einer in der Hand getragenen Vorrichtung, einer elektronischen Vorrichtung, einer Peripherievorrichtung und einer Host-Vorrichtung ist und wobei die ersten Vorrichtungsidentifikationsinformationen einen Namen der Vorrichtung, eine Marke der Vorrichtung, einen Hersteller der Vorrichtung, eine Modellbezeichnung der Vorrichtung, einen Deskriptor der Vorrichtung und/oder eine Identifikationsnummer der Vorrichtung umfassen.

13. Computerlesbares Medium, welches auf ihm gespeicherten Computerprogrammcode umfasst, wobei das computerlesbare Medium und der Computerprogrammcode dafür ausgelegt sind, wenn sie von wenigstens einem Prozessor einer ersten Vorrichtung ausgeführt werden, das folgende Verfahren auszuführen:
Empfangen einer Vorrichtungsermittlungsanfrage von einer separaten zweiten Vorrichtung (202, 222, 404);
Senden einer Vorrichtungsermittlungsantwort, welche erste Vorrichtungsidentifikationsinformationen umfasst, an die separate zweite Vorrichtung (202, 222, 404) in Reaktion auf die Vorrichtungsermittlungsanfrage; und
Bewirken der Wiedergabe, durch eine Ausgabeeinrichtung (14), von Informationen, die auf die ersten Vorrichtungsidentifikationsinformationen schließen lassen, in Reaktion auf die Vorrichtungsermittlungsanfrage, wobei die Ausgabeeinrichtung (14) ein Lautsprecher ist und die Wiedergabe von Informationen, die auf die ersten Vorrichtungsidentifikationsinformationen schließen lassen, die Erzeugung eines Audiosignals umfasst, das wenigstens teilweise auf den ersten Vorrichtungsidentifikationsinformationen basiert, derart, dass das Audiosignal dafür ausgelegt ist, den Lautsprecher zu betätigen.

## Revendications

1. Procédé comprenant :
la réception, par un premier appareil (10, 204, 224, 226, 228, 402), d'une demande de découverte d'appareil en provenance d'un second appareil distinct (202, 222, 404) ;
l'envoi d'une réponse de découverte d'appareil qui comprend des premières informations d'identification d'appareil au second appareil distinct (202, 222, 404) en réponse à la demande de découverte d'appareil ; et
la provocation, par le premier appareil (10, 204, 224, 226, 228, 402), d'un rendu, par un dispositif de sortie (14), d'informations indiquant les premières informations d'identification d'appareil en réponse à la demande de découverte d'appareil, dans lequel le dispositif de sortie (14) est un haut-parleur et le rendu d'informations indiquant les premières informations d'identification d'appareil comprend la génération d'un signal audio en se basant, au moins en partie, sur les premières informations d'identification d'appareil de telle sorte que le signal audio soit configuré pour actionner le haut-parleur.

2. Procédé selon la revendication 1, dans lequel la provocation d'un rendu des informations indiquant les premières informations d'identification d'appareil est effectuée en l'absence d'une directive de rendu provenant du second appareil distinct (202, 222, 404).

3. Procédé selon l'une quelconque des revendications 1 et 2, dans lequel la provocation d'un rendu des informations indiquant les premières informations d'identification d'appareil est effectuée en l'absence d'une relation appariée entre le premier appareil (10, 204, 224, 226, 228, 402) et le second appareil distinct (202, 222, 404).

4. Procédé selon l'une quelconque des revendications 1 à 3, dans lequel la provocation d'un rendu des informations indiquant les premières informations d'identification d'appareil est effectuée avant l'établissement d'une relation appariée entre le premier appareil (10, 204, 224, 226, 228, 402) et le second appareil distinct (202, 222, 404).

5. Procédé selon l'une quelconque des revendications 1 à 4, comprenant en outre la provocation d'un actionnement du dispositif de sortie (14) d'une manière qui fournit à un utilisateur une compréhension des premières informations d'identification d'appareil en se basant, au moins en partie, sur la génération du signal audio.

6. Procédé selon la revendication 5, dans lequel l'actionnement du haut-parleur comprend l'actionnement du haut-parleur de telle sorte que le haut-parleur produise des ondes sonores indiquant le signal audio.

7. Procédé selon l'une quelconque des revendications 1 à 6, dans lequel le signal audio comprend des informations indiquant une représentation de langue parlée des informations d'identification d'appareil.

8. Procédé selon l'une quelconque des revendications 1 à 7, comprenant en outre la détermination, en réponse à la demande de découverte d'appareil, qu'au moins un critère de rendu a été satisfait, dans lequel la provocation d'un rendu des premières informations d'identification d'appareil est effectuée en réponse à la détermination que le critère de rendu a été satisfait.

9. Procédé selon la revendication 8, dans lequel le critère de rendu comprend au moins un critère de rendu circonstancié qui indique au moins une circonstance associée au premier appareil (10, 204, 224, 226, 228, 402) et la satisfaction du critère de rendu circonstancié indique l'occurrence de la circonstance.

10. Procédé selon l'une quelconque des revendications 1 à 9, dans lequel le premier appareil (10, 204, 224, 226, 228, 402) comprend le dispositif de sortie (14).

11. Premier appareil comprenant :
un moyen pour recevoir une demande de découverte d'appareil en provenance d'un second appareil distinct (202, 222, 404) ;
un moyen pour envoyer une réponse de découverte d'appareil qui comprend des premières informations d'identification d'appareil au second appareil distinct (202, 222, 404) en réponse à la demande de découverte d'appareil ; et
un moyen pour provoquer un rendu, par un dispositif de sortie (14), d'informations indiquant les premières informations d'identification d'appareil en réponse à la demande de découverte d'appareil, dans lequel le dispositif de sortie (14) est un haut-parleur et le rendu d'informations indiquant les premières informations d'identification d'appareil comprend la génération d'un signal audio en se basant, au moins en partie, sur les premières informations d'identification d'appareil de telle sorte que le signal audio soit configuré pour actionner le haut-parleur.

12. Appareil selon la revendication 11, dans lequel le premier appareil est soit un téléphone, soit une tablette, soit un ordinateur, soit un appareil portable, soit un appareil porté sur la tête, soit un appareil porté à la main, soit un appareil électronique, soit un appareil périphérique, soit un appareil hôte, et dans lequel les premières informations d'identification d'appareil comprennent un nom de l'appareil et/ou une marque de l'appareil et/ou un fabricant de l'appareil et/ou une désignation de modèle de l'appareil et/ou un descripteur de l'appareil et/ou un numéro d'identification de l'appareil.

13. Support lisible par ordinateur sur lequel est stocké un code de programme d'ordinateur, le support lisible par ordinateur et le code de programme d'ordinateur étant configurés, lorsqu'ils sont exécutés sur au moins un processeur d'un premier appareil, pour réaliser le procédé comprenant :
la réception d'une demande de découverte d'appareil en provenance d'un second appareil distinct (202, 222, 404) ;
l'envoi d'une réponse de découverte d'appareil qui comprend des premières informations d'identification d'appareil au second appareil distinct (202, 222, 404) en réponse à la demande de découverte d'appareil ; et
la provocation d'un rendu, par un dispositif de sortie (14), d'informations indiquant les premières informations d'identification d'appareil en réponse à la demande de découverte d'appareil, dans lequel le dispositif de sortie (14) est un haut-parleur et le rendu d'informations indiquant les premières informations d'identification d'appareil comprend la génération d'un signal audio en se basant, au moins en partie, sur les premières informations d'identification d'appareil de telle sorte que le signal audio soit configuré pour actionner le haut-parleur.
